(19) Europäisches Patentamt
European Patent Office
Office européen des brevets

(11) **EP 0 546 818 B1**

(12) **EUROPEAN PATENT SPECIFICATION**

(45) Date of publication and mention
of the grant of the patent:
**10.06.1998 Bulletin 1998/24**

(51) Int Cl.6: **G11B 20/10**, G11B 27/00, G11B 19/247

(21) Application number: **92311229.6**

(22) Date of filing: **09.12.1992**

(54) **Information recording and reproduction apparatus**

Informationsaufzeichungs- und Wiedergabegerät

Appareil à enregistrer et reproduire des informations

(84) Designated Contracting States:
**DE FR GB IT NL**

(30) Priority: **09.12.1991 JP 324718/91**

(43) Date of publication of application:
**16.06.1993 Bulletin 1993/24**

(73) Proprietor: **SHARP KABUSHIKI KAISHA**
**Osaka-shi, Osaka-fu 545 (JP)**

(72) Inventors:
- **Terashima, Shigeo**
  **Tenri-shi, Nara 632 (JP)**
- **Maeda, Shigemi**
  **Yamatokoriyama-shi, Nara 639-11 (JP)**
- **Kojima, Kunio**
  **Nara-shi, Nara 630 (JP)**

(74) Representative: **Brown, Kenneth Richard et al**
**R.G.C. Jenkins & Co.**
**26 Caxton Street**
**London SW1H 0RJ (GB)**

(56) References cited:
**EP-A- 0 299 573        EP-A- 0 504 429**
**WO-A-91/11002**

- **TOPICAL MEETING ON OPTICAL DATA STORAGE, TECHNICAL DIGEST SERIES 1987, OPTICAL SOCIETY OF AMERICA, vol. 10, 13 March 1987, NEVADA pages 168 - 171 A. ISHIHARA ET AL. 'The New Application of MCAV Method to the Optical Disk Memory'**
- **PATENT ABSTRACTS OF JAPAN vol. 9, no. 292 (P-406)19 November 1985 & JP-A-60 129 989**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

The present invention relates to an information recording and reproduction apparatus which on demand records and reproduces a signal such as a digital audio signal on or from a recording medium such as a compact disk which can be recorded and reproduced.

BACKGROUND OF THE INVENTION

A so-called compact disk (hereinbelow referred as CD) has been widely used. Continuous information (analog data) such as music information is digitally recorded in the form of minute pits which can be optically detected. Digital information recorded on the CD is reproduced by an optical disk reproduction apparatus (CD player) which is used for reproduction only.

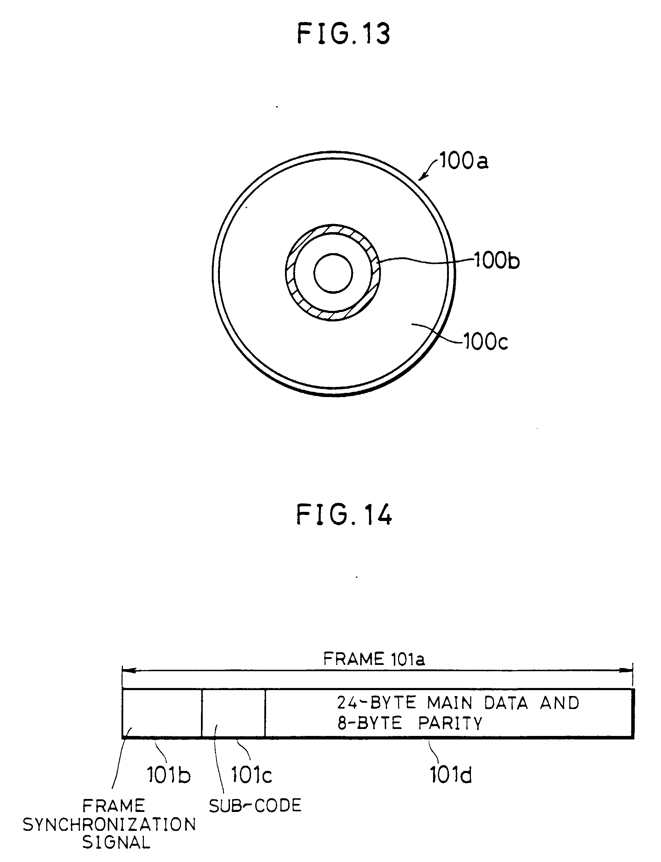

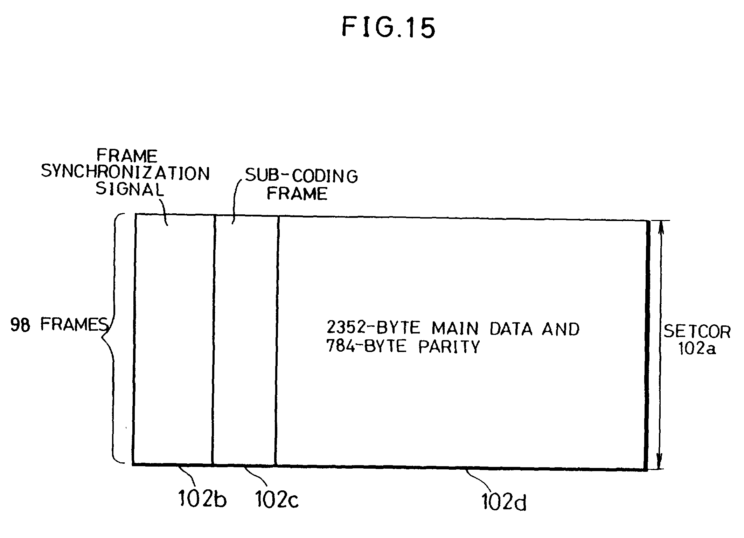

Figs. 14 and 15 show the schematic signal format which is standardized for the CD. As shown in Fig. 14, one frame 101a of a recording signal is composed of: (1) a frame synchronization signal 101b indicative of a head end of the frame; (2) a sub-code 101c for forming an additional information for data; and (3) a data field 101d which is formed by adding 8-byte parity code to 24-byte data of main information. The 8-byte parity code is for correcting error upon detecting the error in the process. The data field 101d is formed based on an error detection and correction system into which non-completion type interleave called as CIRC (Cross Interleaved Reed Solomon Code) is incorporated.

As shown in Fig. 15, one sector 102a is composed of 98 frames. The sub-coding frame 102c of the sector 102a has an additional information contained therein which is summarised for one sector. The sub-coding frame 102c indicates a track number which is refered as a song number when the main information is the music information, and the sub-coding frame 102c also indicates an absolute address on the disk. The absolute address indicates a position where recording or reproduction is carried out.

The length of one sector 102a (hereinbelow referred to a sector length) corresponds to 1/75 seconds according to the CD. Therefore, information of 75 sectors per second can be reproduced from the CD. A sector number is expressed by "minute: second: frame information having a number from 0 to 74". The sector number indicates both time information and position information which respectively increase consecutively as the radial position on the disk becomes far away from the innermost portion.

A data field 102d of the sector 102a has 98 times as much information as that of one frame, i.e., the data field 102d is composed of 2352-byte of main data and 784-byte of parity code. When the main data is audio information, a sampling frequency should be 44.1 kHz, a quantization should be 16-bit with linearity, a number of channel is two (stereo) according to the CD standardization. Accordingly, the number of data per second is given by the following equation:

$$44.1 \text{ (kHz)} \times 16 \times 2 = 1.4112 \text{ (M-bit)} = 176.4 \text{ (k-byte)}$$

The number of data per sector is given by the following equation and coincides with the above-mentioned main data:

$$176.4 \text{ (k-byte)} / 75 = 2352 \text{ (byte)}$$

As shown in Fig. 13, a CD 100a has a main information recording area 100c and a TOC (Table Of Contents) area 100b. Main information such as music information and the sector numbers shown by the sub-code are recorded in the main information recording area 100c. Additional information relating to the main information recorded in the main information recording area 100c is recorded in the TOC area 100b. The additional information mainly contains a track number, a recording start sector number for each track, information for identifying whether the main information recorded in a track is audio information or computer-use data, and other other-information.

When the CD player is loaded with the CD 100a having the above-mentioned format, the additional information is first read out of the TOC area 100b. According to the additional information, the number of the main information (song number for example), the recording start sector number for each main information, the kinds of the recorded information are identified. When received the reproduction instruction, the identified additional information is compared with the sector number derived from the sub-code of the main information recording area 100c. According to this comparison, access operation and reproduction operation are immediately carried out with respect to a desired track.

The information is recorded in the CD based on the CLV (Constant Linear Velocity) method. Therefore, the recording density is constant over the whole disk, i.e., constant irrespective of the radial position of the CD, thereby improving the recording capacity of the CD. The actual CD player rotates the CD at the constant linear velocity such that the interval between the frame synchronization signals is a predetermined one for example. The frame synchronization signals are derived from the reproduced signal which is reproduced from the recorded information in the CD based on the CLV method employing the above-mentioned signal format.

In contrast, when a variety of information such as music information and computer-use data are recorded and reproduced with respect to a rewritable disk such as a magneto-optical disk which has been recently developed, it is preferred to provide a compatible disk recording and reproduction apparatus which has a common reproduction system to both the CD and the magneto-optical disk. In this case, access operation and the CLV control required for even recording operation can not be carried out with respect to an initial disk wherein no information is recorded, since in the initial disk there exists no absolute address information using the above-mentioned sub-code and no frame synchronization signal used for the CLV control.

In order to record an absolute address information which is equivalent to the absolute address information using the sub-code, there is proposed the following method wherein an absolute address information is subjected to "biphase-mark" modulation and a guide groove which is formed beforehand is changed in its shape in a width direction of the guide groove in response to the modulated data, i.e., "1" or "0". For example, the shape of the guide groove is changed in a radial direction of the CD, or the width itself is changed (see U.S. Patent No. 4,907,216).

In the above-mentioned method, when a frequency band of the absolute address information subjected to the biphase-mark modulation is different from a frequency band of the recording information subjected to the EFM (Eight to Fourteen Modulation), the respective information can be separately reproduced. Accordingly, the access operation can be carried out with respect even to a target position of unrecorded area of the disk based on the recorded absolute address information which is recorded in response to the shape change of the guide groove. Further, the accurate CLV control for recording and reproducing of information can be performed by the use of the reproduced carrier component derived from the absolute address information.

However, the disk recording and reproduction apparatus using the above-mentioned rewritable disk can only record information during recording operation or can only reproduce information during reproduction operation like the conventional private-use information recording and reproduction apparatus such as a tape recorder using a compact cassette or other recording medium. In other words, the conventional disk recording and reproduction apparatus has the same function during operations as a processing apparatus for exclusively recording of information or for exclusively reproduction of information. This therefore proposes the problem that simultaneous reproduction of another information can not be carried out during recording operation for some purposes and that simultaneous recording of another information can not be carried out during reproducing operation for other some purposes.

The following is an explanation concerning the above-mentioned problem with reference to the case where recordings of playing the respective musical instruments for a music and thereafter editing is carried out according to the recordings in order to summarize thereof. First recording is performed while the first musical instrument is played. Thereafter, second recording is performed such that the second recording content derived from the playing of the second musical instrument is mixed with the first recording content while listening to the reproduction of the first recording content for confirmation. In order to perform mixing like above, a plurality of recording and reproduction apparatuses and a plurality of recording media are required in accordance with the conventional technique. Therefore, this proposes the problems that the wide space and high cost for keeping the edit-use instruments are required and that the operations for the edit-use instruments should be done in a high efficiency since a plurality of recording and reproduction apparatuses must be operated simultaneously.

Of course, a recording and reproduction apparatus for business use is provided with a plurality of channels for recording and is provided with a multiple track recorder for recording and reproducing of information independently for each channel. However, such recording and reproduction apparatus is so costful because of its multiple functions and forces the operator to have so complicated operations, thereby making it impossible to easily use such apparatuses for private use.

When a song is mixed to record with a background music reproduced from so-called a "karaoke" apparatus for private-use which has been widely used among the ordinary homes, the following things are separately required therefor like above: (1) a recording medium for reproducing of the background music; (2) a reproducing apparatus for reproducing of the background music; (3) a mixing-use recording medium; and (4) a mixing-use recording apparatus. In addition thereto, the above-mentioned apparatuses ((2) and (4)) are required to be simultaneously operated, thereby presenting inconvenience. Further, since the two kinds of recording media must be prepared, so the storage of the recording media is troublesome.

In order to meet the above-mentioned problems, the applicants of the present invention proposed a recording and reproduction apparatus, which has a buffer memory in a recording processing system and a buffer memory in a reproduction processing system, for simultaneously recording and reproduction of information (this apparatus is disclosed in the Japanese patent application which was filed on November 28, 1991). According to this apparatus, with respect to each buffer memory a data writing speed is different from a data reading speed. The recording operation and the reproduction operation are alternately carried out repeatedly with respect to respective different portions of the CD. With the arrangement, the recording and reproduction can be simultaneously carried out. However, this apparatus has still the following problems therein.

Namely, in order to increase the amount of information of the CD or other recording media as much as possible, a recording length of information in the CD is designed so as to have a constant length irrespective of the radial position of the CD over the whole disk, i.e., for example, the recording length of the inner portion of the disk coincides with the recording length of the outer portion of the disk. Accordingly, the CLV control method is adopted in order that the CD rotates at a high speed during recording/reproduction of information with respect to the inner portion of the CD while the CD rotates at a low speed during recording/reproduction of information with respect to the outer portion of the CD.

With the above-mentioned arrangement, when the recording operation and the reproduction operation are alternately carried out repeatedly with respect to respective different portions of the CD so as to simultaneously carry out the recording and reproduction operations, it is restricted that these plural portions where information are recorded and reproduced should be as close as possible with each other. This is based on the fact that when the plural portions where information are recorded and reproduced are far away with each other, even though an optical head can move at a high speed from one portion to another portion, it is likely to take further time for the rotation speed of a motor for rotating the CD to reach a specified rotation speed required for recording and reproduction of information on the moved portion of the CD. Accordingly, the longer the distance between the above-mentioned portions is, i.e., the longer the required time for changing the rotation speed is, the more capacity is required for the buffer memory, thereby presenting a big problem.

JP-A-60 129989 describes a system for simultaneously reproducing and recording information with respect to a recording medium by controlling the switching of a plurality of buffer memories.

In "Topical Meeting on Optical Data Storage" of the Optical Society of America, March 11-13 1987, p. 168-171 there is disclosed a modified CAV (Constant Angular Velocity) method for optical disc recording, in which the fast access of CAV and large capacity of CLV are combined; the bit rate of the data is changed in proportion to radial position while operating in the CAV regime.

EP-A-299573 discloses a system for controlling a motor which rotates a disc in accordance with positional information provided in biphase-mark-modulated form on the disc.

EP-A-463183, on which the preamble of claim 1 is based, discloses a data recording method in which input data are compressed and the compressed data are stored in a buffer and read out in data bursts which are recorded at a disc speed in correspondence to the data rate of the data bursts.

SUMMARY OF THE INVENTION

The present invention aims to provide an information recording and reproduction apparatus which can record and reproduce information simultaneously at a high speed with respect to arbitrary different portions on a recording disc in order to overcome the afore-mentioned problems.

To this end, the present invention provides in one aspect, apparatus for recording and reproducing information with respect to a recording disc which is pre-recorded over a recording area thereof with position information for use in CLV control, the apparatus comprising:

position information detection means for detecting said position information so as to determine the current position on the recording disc for a recording or reproducing operation;
recording-use memory means for temporarily storing information which has been written therein and which is to be recorded on said recording disc;
reproduction-use memory means for temporarily storing information which has been reproduced from said recording disc and has been written thereon;
rotation speed control means for controlling the speed of rotation of said recording disc;
reading speed control means for controlling the respective bit rates at which information is read from said recording-use and reproduction-use memory means;

characterised by

operation control means operable in a simultaneous recording and reproducing mode of operation of the apparatus to cause the rotation speed control means to effect rotation of the disc at the same rotational speed when recording or reproducing at a first radial position on the disc and when recording or reproducing at a second radial position on the disc, and to cause the reading speed control means to set the relative reading bit notes of the recording-use and reproduction-use memory means employed during the recording or reproducing at the first radial position and during the recording or reproducing at the second radial position in accordance with the detected position information relating to said first and second radial positions so that one or other of said recording-use and reproduction-use memory means has different bit rates for the operations of information writing therein and reading therefrom, the factor of said operations being carried out on information in the form of data bursts, and so as to compensate for the radial separation of said first and second radial positions and thereby maintain the operation as equivalent to CLV operation.

With this arrangement, the recording disc rotates at a first rotational speed and the information is immediately recorded or reproduced at the first radial position on the recording disc. Thereafter, the recording or reproduction operations are carried out at the second radial position while the rotation speed of the recording medium is kept at the first rotation speed. At this time, the recording-use memory means and reproduction-use memory means are compensated by operation of the operation control means such that the data transmission speed of each of the recording-use memory means and reproduction-use memory means coincides with the data transmission speed based on the CLV control method.

Accordingly, it is not necessary to change the rotation speed with respect to the second radial position. So, recording/reproduction of information is immediately carried out according to the position information which is pre-recorded over the entire surface based on the CLV control method.

Moreover, the reproducing operation through the reproduction-use memory means and the recording operation through the recording-use memory means are alternately carried out intermittently and at the same time consecutive recording and reproduction operations are carried out simultaneously with respect to the different radial positions, thereby permitting simultaneous recording and reproduction operations at a high speed.

The present invention also provides, in another aspect, a method of simultaneously recording and reproducing respective information on a recording disc, the recording disc carrying pre-recorded position information for use in CLV control, the method comprising simultaneously recording and reproducing information at respective different radial positions on the disc while rotating the disc at the same rotational speed, the operation being maintained equivalent to CLV operation by detecting the position information and compensating the relative reading bit rates of recording-use and reproduction-use buffer memories which temporarily store the information which is, respectively, to be recorded on and read from said disc, said compensating being effected in accordance with the detected said position information, so that one or other of said recording-use and reproduction-use memory means has different bit rates for the operations of information writing thereon and reading therefrom, the faster of said operations being carried out on information in the form of data bursts.

Fig. 1 is a block diagram showing the structure of an information recording and reproduction apparatus of the present invention;

Fig. 2 is an explanatory diagram showing a recording area of a recording medium for use in the present embodiment;

Fig. 3 is a partial enlarged view showing how position information is pre-recorded on the recording medium of Fig. 2;

Fig. 4 is a depiction illustrating the main data format in a sector;

Fig. 5 is a depiction illustrating the structure of the sector in a block;

Fig. 6 is a timing chart showing the change of information relating to the recording operation;

Fig. 7 is a timing chart showing the change of information relating to the reproducing operation;

Fig. 8 is a depiction illustrating a position of reproducing operation on the recording medium.

Fig. 9 is a depiction illustrating the relation between the rotation speed of the recording medium and the bit length of reproduced information;

Fig. 10 is a depiction illustrating the change of the bit length of the reproduced information which is inputted and outputted to a buffer memory;

Fig. 11 is an explanatory diagram showing a central frequency component of an absolute address carrier signal which is detected from the position information pre-recorded on the recording medium;

Fig. 12 is a timing chart showing the change of information relating to the simultaneous recording and reproduction operations;

Fig. 13 is an explanatory diagram showing a recording area of a conventional compact disk;

Fig. 14 is a depiction illustrating the frame signal format of the conventional compact disk;

Fig. 15 is a depiction illustrating the sector format of the conventional compact disk; and

Fig. 16 is a flow chart showing a control flow of an optical head movement and the signal processing during simultaneous recording and reproduction of information in accordance with the present invention.

DESCRIPTION OF THE EMBODIMENTS

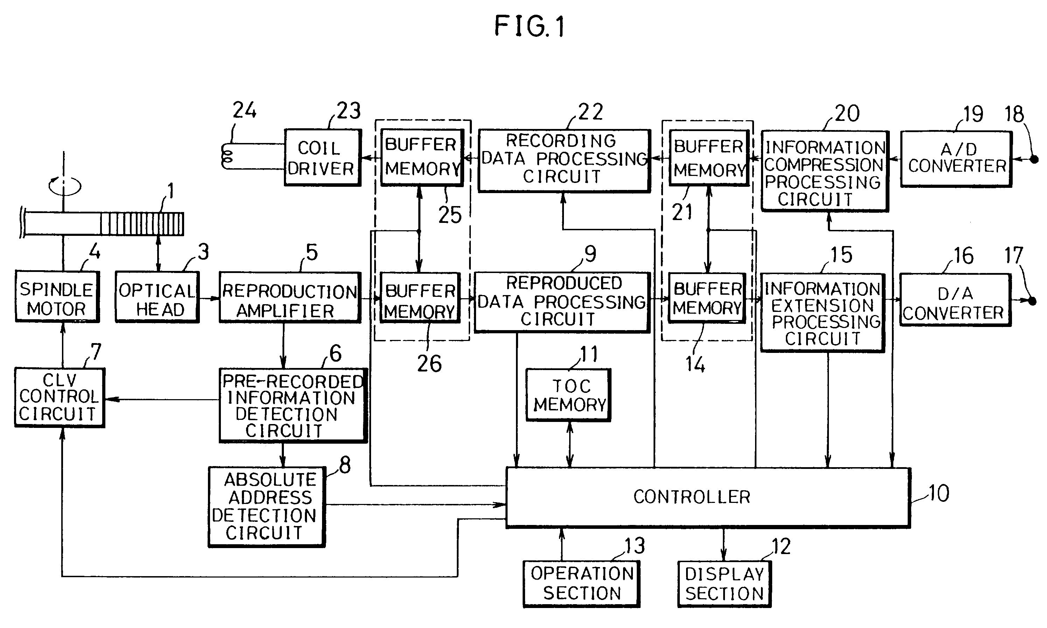

The following description deals with one preferred embodiment of the present invention with reference to Figs. 1 through 12.

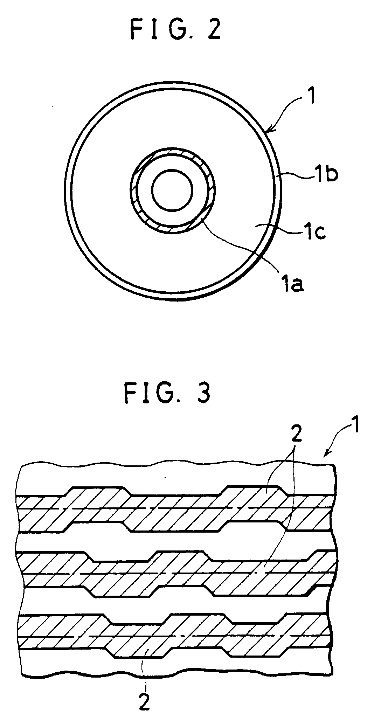

First, an explanation concerning the structure of a disk for use in an information recording and reproduction apparatus of the present invention is given hereinbelow. As shown in Fig. 2, a disk 1 has: (1) a lead-in area, i.e., a TOC (Table Of Contents) area 1a in the inner part of the disk 1; (2) lead-out area 1b in the outer part of the disk 1; and (3) a recording area 1c between the TOC area 1a and the lead-out area 1b. Various information relating to the disk 1 are recorded in the respective TOC area 1a and lead-out area 1b. Main information which is used by users is recorded in the recording area 1c. One part or the whole parts of the main information may be pre-recorded by a disk supplier.

As shown in Fig. 3, an absolute address indicative of position information for recording/reproduction of information with respect to the disk 1, for example, is recorded as pre-recorded information during the manufacturing process thereof such that a guide groove on the disk 1 is slightly wound, i.e., wobbled, in response to a predetermined frequency signal with respect to a radial direction of the disk 1. The signal having the predetermined frequency, for example, corresponds to biphase-mark modulation data of the absolute address. The absolute address in accordance with this embodiment indicates a position of each sector. Accordingly, the absolute address may be referred as a sector address.

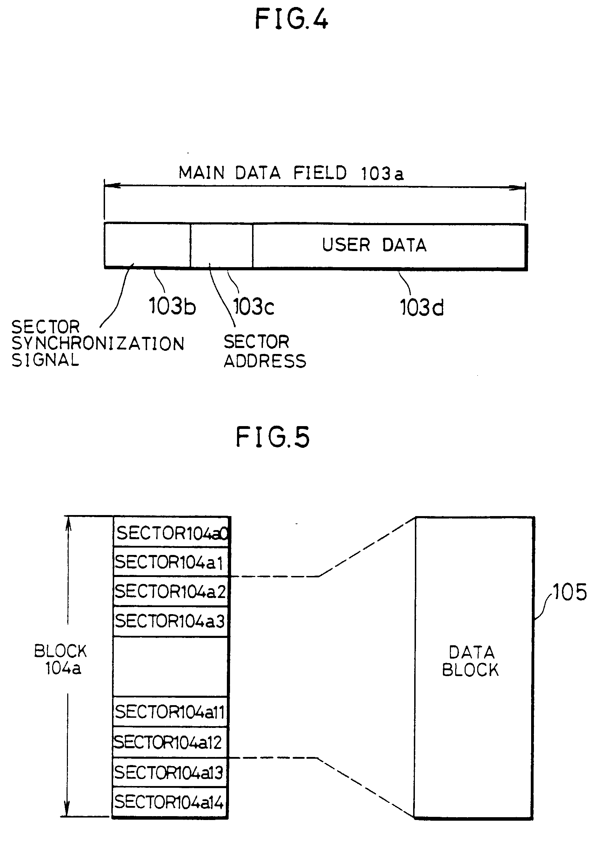

Fig. 4 shows the format concerning a main data portion of 2352-byte which is contained in one sector. A main data field 103a is composed of: (1) a sector synchronization signal 103b for identifying a head end of the sector; (2) a sector address 103c indicative of the address of each sector; and (3) user data 103d. The byte-number of the main data field 103a is assigned in accordance with a CD-ROM (Read Only Memory) as follows: (1) 12-byte for the sector synchronization signal 103b; (2) 4-byte for the sector address 103c (referred as a header for the CD-ROM); and (3) 2336-byte for the user data 103d.

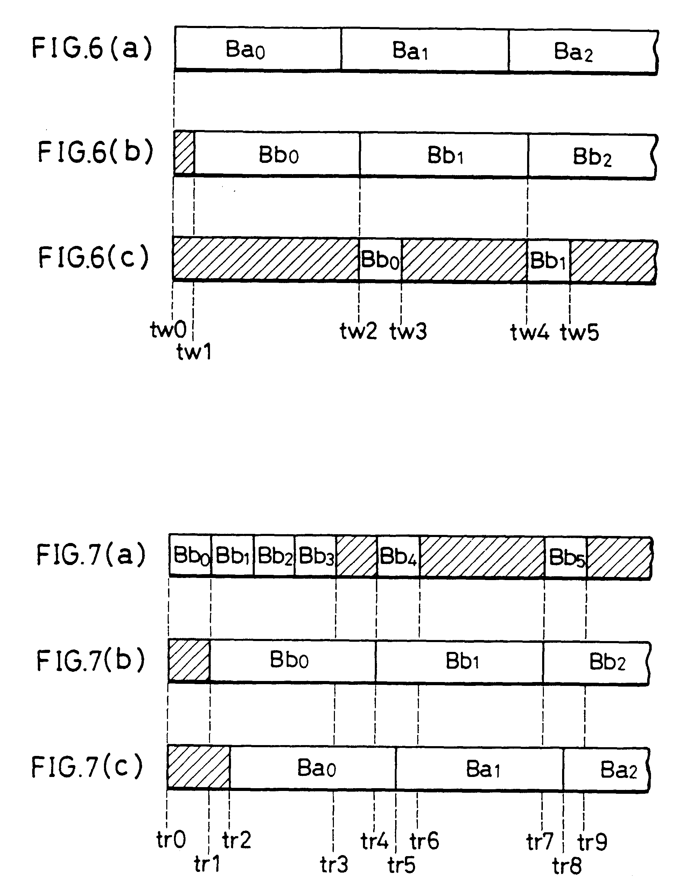

Fig. 5 shows the format concerning the block structure which is employed in order to enable to rewrite the information. A block 104a, which is a minimum unit for recording and reproduction processes, is subjected to the compression process. As the result, the block 104a is composed of the total fifteen (15) sectors, i.e., a sector $104a_0$ to $104a_{14}$. Among these sectors, the sectors $104a_0$, $104a_1$, $104a_{13}$, and $104a_{14}$ are additional sectors required for rewriting of the information by block unit. There are some reasons why the additional sectors are required. For example, when a desired sector should be rewritten based on the signal format of the CD standardization, there are likely to exist some data which have no relation in the meaning to new data to be recorded before and after the range wherein the rewriting of information is carried out. Accordingly, there are so many data errors in the starting position and the ending position for the rewriting of information. In order to achieve the original correction ability of the non-completion type interleave based on the CIRC, a code transmission length of one hundred and five (105) frames is required. Accordingly, 1.07 (= 105/98) sectors, i.e., two (2) more sectors should be added before and after the sector having ninety-eight (98) frames. The additional sectors of the head end side is also required for a pull-in region for carrying out the PLL (Phase Locked Loop) from a rewriting start position.

Thus, a data block 105 is composed of the eleven (11) sectors $104a_2$ to $104a_{12}$, and the data amount of the data block 105 is nearly equal to 206-kbit based on $2336 \times 11 \fallingdotseq 25. 7$-kbyte.

The following deals with one structural embodiment of the information recording and reproduction apparatus in accordance with the present invention. As shown in Fig. 1, the information recording and reproduction apparatus in accordance with the present embodiment can carry out magneto-optical recording of information based on the magnetic field modulation system and can also carry out overwriting of new information with respect to a portion of the disk 1 wherein information is already recorded. In order to achieve this, the present embodiment is provided with an optical head 3 for projecting laser light onto the disk 1 during recording and reproduction of information, and a coil 24 for applying the modulated magnetic field to the disk 1 during recording of information. A spindle motor 4 rotates the disk 1.

An input terminal 18 of the recording system is connected to an input terminal of an A/D converter 19 for converting an analogue signal into a digital signal. An output signal of the A/D converter 19 is outputted to an information compression processing circuit 20 for compressing the digital signal based on a predetermined algorithm. The information compression processing circuit 20 is connected to a controller 10 and receives a sector address from the controller 10. An output signal of the information compression processing circuit 20 is outputted to a recording data processing circuit 22 for carrying out a predetermined signal processing such as the modulation through a buffer memory 21 for temporarily storing information by a block unit. An output signal of the recording data processing circuit 22 is outputted to a coil driver 23 for generating a reversed magnetic field at a high speed through a buffer memory 25.

In addition, the buffer memory 21 and the buffer memory 25 are respectively connected to the controller 10, and the controller 10 controls output timings for the respective buffer memories 21 and 25.

In the recording system, an output signal of the optical head 3 is outputted to a reproduction amplifier 5. An output signal of the reproduction amplifier 5 is outputted to a reproduced data processing circuit 9 for carrying out a predetermined signal processing such as the demodulation through a buffer memory 26. The output of the reproduction amplifier 5 is also outputted to a pre-recorded information detection circuit 6, which is composed of band-pass filter and a PLL for example.

An output signal of the reproduced data processing circuit 9 is outputted to an information extension processing circuit 15 for obtaining the original digital signal by carrying out extension processing, which corresponds to the above-mentioned compression processing, through a buffer memory 14. An output signal of the information extension processing circuit 15 is outputted to an output terminal 17 through a D/A converter 16 for converting a digital signal into an analogue signal. In addition, the buffer memories 26 and 14 are respectively connected to the controller 10, and the controller 10 controls output timings for the respective buffer memories 26 and 14. Further, the reproduced data processing circuit 9 and the information extension processing circuit 15 are respectively connected to the controller 10, and the controller 10 receives necessary information from the both circuits 15 and 9.

An output signal of the pre-recorded information detection circuit 6 is outputted to a CLV control circuit 7 for controlling the rotation speed of the spindle motor 4 and the output signal of the pre-recorded information detection circuit 6 is also outputted to an absolute address detection circuit 8. The absolute address detection circuit 8 is composed of a biphase-mark demodulation circuit and an address decoder. Accordingly, the CLV control circuit 7 receives from the absolute address detection circuit 8 a clock signal required for the CLV control. The absolute address detection circuit 8 detects an absolute address (i.e., a sector address) which is outputted to the controller 10.

An output signal of an operation section 13 is outputted to the controller 10, thereby transmitting the operator's instructions for recording and reproduction of information. A display section 12 is connected to the controller 10, the display section 12 respectively displaying song numbers relating to the recording and reproduction, and information relating to time and other information gradually.

The following is an explanation of the basic recording and reproduction of information based on the above-mentioned arrangement. An analogue audio information is inputted to the A/D converter 19 through the input terminal 18. The A/D converter 19 converts the analogue audio information into a digital audio information under the conditions where a sampling frequency is 44.1 kHz, a quantization is 16-bit. In case of two channels, like previously mentioned, the data amount per second is as follows:

$$44.1 \text{ (kHz)} \times 16 \text{ (bit)} \times 2 = 1.4112 \text{ (Mbps)}$$

As shown in Fig. 6(a), the digital audio information is expressed as the audio block train $Ba_0$, $Ba_1$, $Ba_2$ ⋯ ⋯ to which the information compression processing circuit 20 has not yet carried out the compression processing. Each audio block contains the audio information corresponding to 0.8 seconds and the information amount thereof is given as follows:

$$1.4112 \text{ (Mbps)} \times 0.8 \text{ (seconds)} = 1.12896 \text{ (Mb)} = 141.12 \text{ (k-byte)}$$

The information compression processing circuit 20 generates the compressed audio information based on the digital audio information such that the digital audio information is compressed to be 256 (kbps) by 2 channels, i. e., 128 (kbps) per channel. Accordingly, an information compression ratio of 1/5.5 ($\fallingdotseq$ 256k/1.41M) is obtained. In particular to the information compression, the Japanese document entitled "Algorithm and standardization trend of sound coding" whose author is Shinji HAYASHI (Shingaku Technical Report, vol. 89, No. 434, pages 17 to 22) discloses thereof. The present invention deos not limit how to compress information. So, the detailed explanations concerning thereof are omitted here.

Accordingly, the information compression processing circuit 20 generates the compressed audio information of 141.12 (k-byte)/5.5 $\fallingdotseq$ 25.66 (k-byte) per block. Further, the information compression processing circuit 20 adds the following to this compressed audio information: (1) the above-mentioned sector synchronization signal (12-byte $\times$ 15-sector); (2) the sector address from the controller 10 (4-byte $\times$ 15-sector); and (3) the additional sectors (2336-byte $\times$ 4). Accordingly, as shown in Fig. 6(b), respective compressed audio blocks $Bb_0$, $Bb_1$, $Bb_2$ ⋯ ⋯ have the byte amount of 35.2 (kbyte). This is based on the following equation:

$$25.66k + (12 \times 15) + (4 \times 15) + (2336 \times 4) \fallingdotseq 35.2k$$

The compressed audio blocks $Bb_0$, $Bb_1$, $Bb_2$ ⋯ ⋯ are written in the buffer memory 21 from time tw1. Due to the time required for the processing, there is a slight time delay between time tw1 and time tw0 from which the audio blocks $Ba_0$, $Ba_1$, $Ba_2$ ⋯ ⋯ start to be provided. The transmission speed at which data are written in the buffer memory 21 is as follows:

$$35.2 \text{ (k-byte)} \times 8 \text{ (bytes)}/0.8 \text{ (seconds)} \fallingdotseq 352.4 \text{ (kbps)}$$

As shown in Fig. 6(c), the compressed audio blocks $Bb_0$, $Bb_1$, $Bb_2$ ⋯ ⋯, which are outputted to the recording data processing circuit 22, are one by one read out of the buffer memory 21 in response to the instruction from the controller 10 upon each completion of writing operation of the compressed audio block. For example, the compressed audio block $Bb_0$ is read out of the buffer memory 21 upon completion of writing of the block $Bb_0$ in the buffer memory 21 at time tw2. The compressed audio block $Bb_1$ is read out of the buffer memory 21 upon completion of writing of the block $Bb_1$ in the buffer memory 21 at time tw4.

In addition, the reading speed at which data are read out of the buffer memory 21 (i.e., corresponding to the transmission speed of the audio information) is 1.41 (Mbps) which is the same as the conventional CD. The reading speed of the buffer memory 21 is nearly four times ($4 \fallingdotseq 1.41$ (Mbps)/352.4 (kbps)) as fast as the writing speed at which data are written in the buffer memory 21. The respective compressed audio blocks $Bb_0$, $Bb_1$, $Bb_2$ ⋯ ⋯ are composed of fifteen (15) sectors and the sector length is 1/75 seconds as mentioned above. So, the information amount of 1/75 (seconds) $\times$ 15 = 0.2 (seconds) is contained in each compressed audio block. Accordingly, this 0.2 (seconds) is one quarter as long as the occupied time, i.e., 0.8 (seconds) of the respective audio blocks $Ba_0$, $Ba_1$, $Ba_2$ ⋯ ⋯ prior to the compression processing. This result coincides with the above-mentioned transmission speed ratio.

As mentioned above, the time required for the processing operation by the recording data processing circuit 22 is 1/4 times as short as the case where the buffer memory 21 is not provided. For the residual time, i. e., 3/4 of the time required for the processing operation, the recording data processing circuit 22 is in the stand-by condition.

Specifically, the recording data processing circuit 22 generates the parity code for correcting error upon detecting the error in the process based on the CIRC and adds it to the compressed audio blocks $Bb_0$, $Bb_1$, $Bb_2$ ⋯ ⋯ which are supplied by the buffer memory 21. The recording data processing circuit 22 carries out the following further additions with respect to the compressed audio blocks $Bb_0$, $Bb_1$, $Bb_2$ ⋯ ⋯ : (1) the addition of the sub-code information from the controller 10 for each sector; (2) thereafter the addition of the frame synchronization signal for each frame after carrying out the EFM (Eight to Fifteen Modulation). The signals thus added are outputted from the recording data processing circuit 22 to the buffer memory 25.

The reading speed at which data are read out of the buffer memory 25 varies depending on the instructions from the controller 10. For example, when the recording and reproduction operations are simultaneously carried out with respect to different portions of the disk 1, it is assumed that the rotation speed of the spindle motor 4 with respect to the recording portion should be 1/2 times as slow as that with respect to the reproducing portion in order to keep the linear velocity constant. At this time, when the reading speed of the buffer memory 25 is twice as fast as the writing speed of the buffer memory 25, normal recording can be carried out while the disk 1 still rotates at the high speed associated with the reproducing portion.

Accordingly, the recording and reproduction operations can be simultaneously carried out with respect to the arbitrary different portions of the disk 1 by only changing the reading speed of the buffer memory 25 depending on the recording portion, i.e., without changing the rotation speed of the spindle motor 4.

The explanation how the controller 10 controls the buffer memory 26 for the reproduction system (later described) will substitute for the detailed explanation how the controller 10 controls the buffer memory 25.

As mentioned above, the compressed audio blocks $Bb_0$, $Bb_1$, $Bb_2$ ⋯ ⋯ are outputted from the buffer memory 25 to the coil driver 23 in response to the required timing for the recording portion. The coil driver 23 drives the coil 24 in response to the buffer memory 25 and at the same time the laser light is projected to the disk 1 from the optical head 3, thereby enabling to carry out recording of a signal.

The following deals with the basic reproducing operation of information. The optical head 3 outputs a reproduced signal to the reproduction amplifier 5 in which the reproduced signal is amplified. The amplified reproduced signal is written in the buffer memory 26, thereafter the written signal is read out of the buffer memory 26 in response to the required timing. And, the signal read out of the buffer memory 26 is outputted to the reproduced data processing circuit 9. Writing/reading controls with respect to the buffer memory 26 will be described later. The reproduced data processing circuit 9 removes the frame synchronization signal from binary magneto-optical signal Ps which is contained in the reproduced signal and further removes the sub-code information after carrying out the EFM demodulation. Thereafter, the above-processed signal and information are outputted to the controller 10. The reproduced data processing circuit 9 also carries out the error correction upon detection of the error in the process based on the CIRC which uses the parity code for correcting the error upon detecting thereof.

As shown in Fig. 7(a), the reproduced data to which the error correction is carried out by the reproduced data processing circuit 9 is temporarily stored in the buffer memory 14 in the form of the compressed audio blocks $Bb_0$, $Bb_1$, $Bb_2$ ⋯ ⋯. At this time, when it is assumed that the memory capacity of the buffer memory 14 corresponds to the capacity equal to four (4) blocks for example, writing operation is once stopped, after the four compressed audio blocks $Bb_0$ to $Bb_3$ are written in the buffer memory 14 during the period from time tr0 to time tr3. The writing speed with respect to the buffer memory 14 is 1.41 (Mbps) in comformity with that of the above-mentioned recording operation.

As shown in Fig. 7(b), at time tr1 when the compressed audio block $Bb_0$ finishes to be written in the buffer memory 14, this written compressed audio block $Bb_0$ starts to be read out of the buffer memory 14. The read out block $Bb_0$

starts to be transmitted to the information extension processing circuit 15. The reading speed of the buffer memory 14 is 352.4 (kbps) in conformity with that of the above-mentioned recording operation. When the compressed audio block $Bb_0$ finishes to be read out of the buffer memory 14 at time tr4, there is a vacant area, corresponding to one block, for storing in the buffer memory 14. So, the next compressed audio block $Bb_4$ starts to be written in the buffer memory 14, thereby receiving another stand-by condition.

The information extension processing circuit 15 samples the sector address information, which is outputted to the controller 10, from the compressed audio block $Bb_0$, and carries out the extension processing with respect to the compressed audio information. Note that the extension processing corresponds to the above-mentioned compression processing. As shown in Fig. 7(c), the extended audio block $Ba_0$ is outputted to the D/A converter 16 from time tr2. There is a slight time delay between time tr1 and time tr2 due to the extension processing.

The analogue audio information is continuously taken out of the output terminal 17 according to the following process: (1) intermittently reading out the compressed audio block from the disk 1 whenever there is a vacant area corresponding to one block for storing in the buffer memory 14; and (2) making up for the vacant area of the buffer memory 14 one by one.

In contrast, in the pre-recorded information detection circuit 6, the band-pass filter removes the above-mentioned pre-recorded information from the output signal of the reproduction amplifier 5. And, the PLL in the pre-recorded information detection circuit 6 generates the clock signal which is synchronized with the pre-recorded information. The CLV control circuit 7 compares the clock signal with a reference frequency signal from the controller 10. According to the resultant difference signal derived from the comparison of the controller 10, the CLV control circuit 7 controls the rotation speed of the spindle motor 4 with accuracy. The absolute address detection circuit 8 carries out the biphase-mark demodulation with respect to the pre-recorded information, and thereafter obtains the absolute address by the decoding, in order to output it to the controller 10.

The controller 10 identifies where the optical head 3 is located on the disk 1 according to the absolute address (i. e., the sector address) from the absolute address detection circuit 8, and also makes the optical head 3 move to the desired position of the disk 1 based on the controlling of an optical head moving mechanism (not shown). The controller 10 identifies the sub-code from the reproduced data processing circuit 9, and stores the sub-code as the managing information in the TOC memory 11 when the identified sub-code belongs to the TOC area 1a. The managing information is read out of the TOC memory 11 when it becomes necessary to do so. Further, the controller 10 outputs the sector address corresponding to the absolute address to the information compression processing circuit 20 during the recording operation, and stores the absolute address relating to the recorded main information in the TOC memory 11. The registration of the managing information with respect to the TOC area 1a is carried out by supplying the content of the TOC memory 11 as the sub-code information to the recording data processing circuit 22 when it becomes necessary to do so.

The following deals with the control of writing/reading of information with respect to the buffer memory 26 and the function of the buffer memory 26.

First, it is assumed that there are recorded in the disk 1 two kinds of information, i.e., the first and second audio information and the first audio information is recorded in region R1 of the inner side of the disk 1 while the second audio information is recorded in region R2 of the outer side of the disk 1. It is further assumed that the rotation speed of the disk 1 based on the CLV control is N1 when the optical head 3 reproduces region R2.

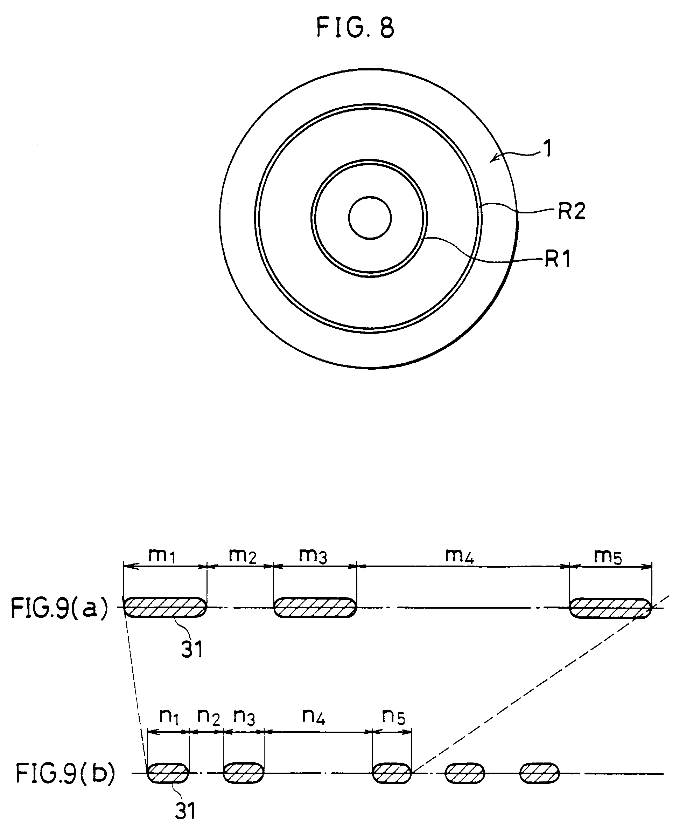

At this time, as shown in Fig. 9(b), information bits 31 are reproduced so as to have the respective bit lengths $n_1$, $n_2$, $n_3 \cdots \cdots$ specified by the CLV control with respect to the rotation direction of the disk 1. The reproduced data are temporarily stored in the buffer memory 26. In addition, each abscissa axis of Figs. 9(a) and 9(b) corresponds to, for convenience, the time axis.

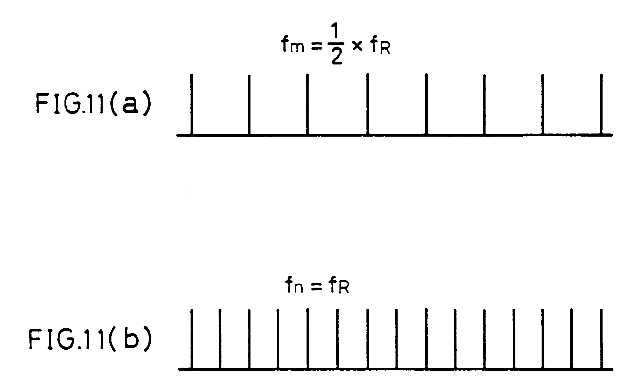

The controller 10 continuously monitors the output signal of the absolute address detection circuit 8. When the disk 1 rotates at a specified rotation speed corresponding to the position of the optical head 3, an absolute address carrier signal having a constant frequency fR is detected. Accordingly, as shown in Fig. 11(b), frequency $f_n$ of the absolute address carrier signal is equal to constant frequency $f_R$, when the optical head 3 reproduces the information bits 31 such that each bit length of the information bits 31 coincides with the specified bit length.

Next, when the optical head 3 moves to region R1 of the inner side of the disk 1 so as to reproduce the first audio information, the rotation speed of the disk 1 should be fundamentally changed from N1 to N2 which is faster than N1 based on the CLV control. However, the change of the rotation speed of the disk 1 results in that the next recording/ reproduction with respect to the arbitrary different portions of the disk 1 can not be carried out at a high speed. This is because it takes long for the rotation speed of the spindle motor 4 to reach a steady state after changing the rotation speed of the disk 1.

In order to meet the above-mentioned deficiency, the information recording and reproduction apparatus of the present invention is arranged such that recording/reproduction of different information is carried out at rotation speed N1 at which the disk 1 rotates so as to coincide with the rotation speed at which the disk 1 rotates before the movement of the optical head 3, i.e., the rotation speed of the disk 1 does not change before and after the movement of the optical head 3. The rotation speed of the disk 1 is kept, for example, in such a manner that the controller 10 calculates a reference frequency which corresponds to that of the position to which the optical head 3 moves. The resultant reference frequency is outputted to the CLV control circuit 7. The reference frequency is calculated according to a radial position of the disk and a linear velocity which correspond to an absolute address.

In the above-mentioned case, for the purpose of brevity of the explanation, it is assumed that the same information as region R2 is recorded in region R1 in the form of the information bits 31. The optical head 3, therefore, reproduces the information at rotation speed N1 which is slower than rotation speed N2 specified by the CLV control. As the result, as shown in Fig. 9(a), the information bits 31 are not reproduced so as to have the respective specified bit lengths $n_1$, $n_2$, $n_3$ ··· ··· but are reproduced so as to have elongate bit lengths $m_1$, $m_2$, $m_3$ ··· ···.

It is now assumed that N2= 2 × N1. So, the respective equations $m_1 = 2 \times n_1$, $m_2 = 2 \times n_2$ ··· ··· are given. More specifically, the information bits 31 are recorded in regions R1 and R2 so as to have the same bit lengths. However, elongate signals in time, as they are, are outputted to the buffer memory 26 so as to be stored therein, since the disk 1 rotates slowly. As shown in Fig. 11(a), frequency $f_m$ of the absolute address carrier signal which is reproduced in region R1 becomes 1/2 times of constant frequency $f_R$. This corresponds to the fact that the bit lengths $m_1$, $m_2$, $m_3$ ··· ··· become twice as long as those of the respective specified bit lengths.

The controller 10, thus, detects the change of the above-mentioned frequency $f_m$ with respect to constant frequency $f_R$. The change is a decrease in this case. According to the detection, the controller 10 changes frequency $t_x$ of a reading-use clock signal which is outputted to the buffer memory 26, and controls the buffer memory 26 such that the information bits 31, which are reproduced so as to have the elongate bit lengths $m_1$, $m_2$, $m_3$ ··· ···, are read out of the buffer memory 26 so as to have the respective specified bit lengths $n_1$, $n_2$, $n_3$ ··· ···.

In the above-mentioned case, as Table 1 shows, when frequency $f_m$ is 1/2 times of the constant frequency $f_R$, frequency $t_x$ satisfies the equation: $t_x = 2 \times t_1$, where $t_1$ is the frequency of the reading-use clock signal which is outputted from the controller 10 to the buffer memory 26 when frequency $f_n$ is equal to constant frequency $f_R$.

TABLE 1

| FREQENCY OF ADDRESS CARRIER SIGNAL | READING-USE CLOCK SIGNAL OF MEMORY |
|---|---|
| $f_n = f_R \rightarrow t_x = t_1$ | |
| $f_m = (1/2)f_R \rightarrow t_x = 2 \times t_1$ | |

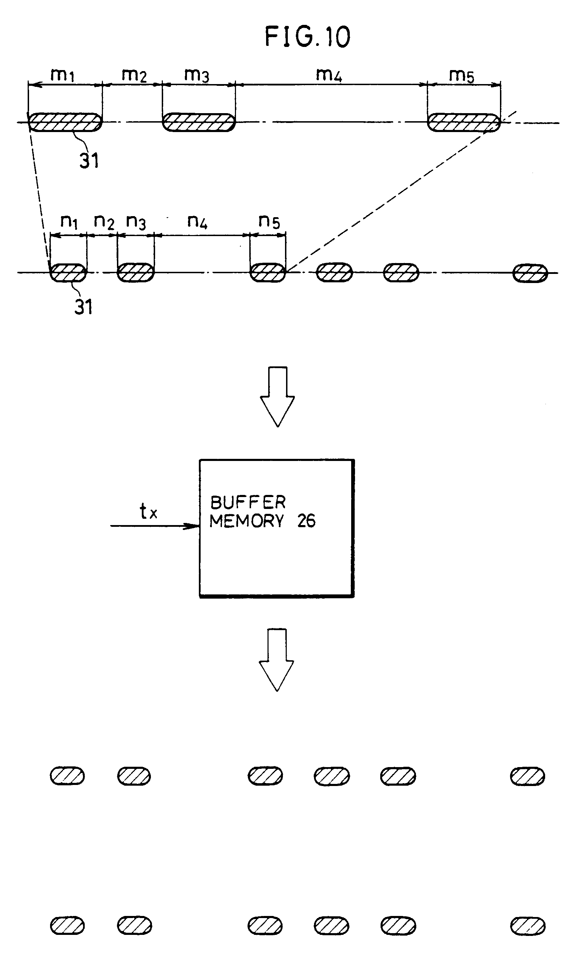

As shown in Fig. 10, the reproduced data processing circuit 9 receives magneto-optical signal Ps having the specified bit lengths $n_1$, $n_2$, $n_3$ ··· ··· as if the information bits 31 of region R1 were reproduced at rotation speed N2 specified by the CLV control.

The following deals with the case where the first music information, which is already recorded in the recording area 1c of the disk 1, is reproduced and at the same time the second music information is recorded just after the first music information.

It is assumed that the managing information of Table 2 (described below) is recorded in the TOC area 1a with respect to the first music information. More specifically, the first music information starts to be recorded at the sector address of "01-minute 00-second 1st-frame" and ends at the sector address of "04-minute 18-second 15th-frame". During the reproducing operation, this managing information is read out of the TOC area 1a and is recorded in the TOC memory 11.

TABLE 2

| MUSIC NUMBER | RECORDING START SECTOR ADDRESS | RECORDING END SECTOR ADDRESS |
|---|---|---|
| 01 | 01-min 00-sec 01-frame | 04-min 18-sec 15-frame |

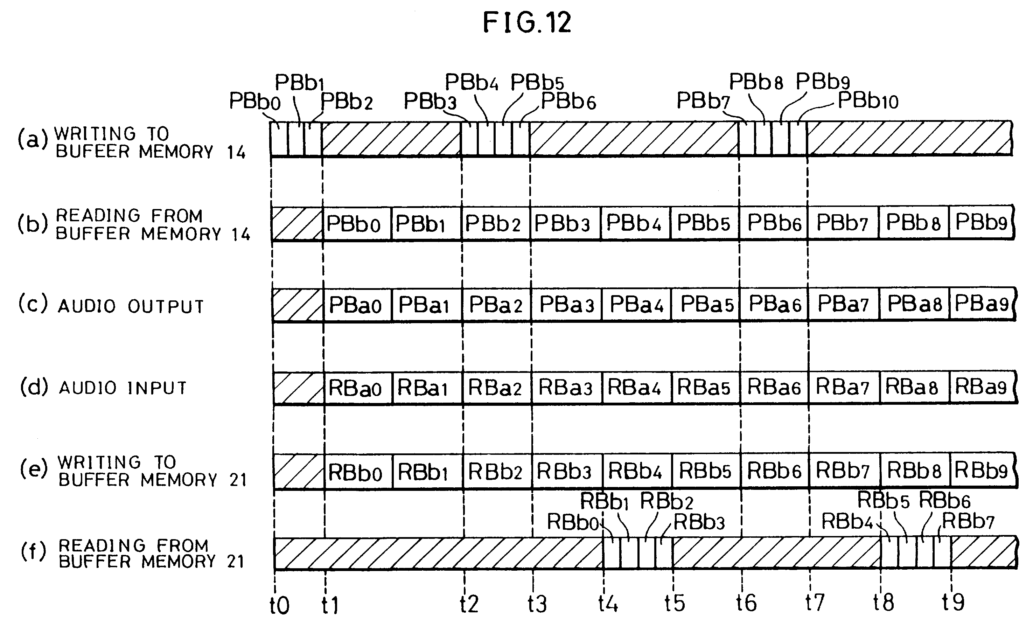

Figures 12(a), 12(b) and 12(c) show the data sequence relating to the reproduction operation respectively while Figures 12(d), 12(e) and 12(f) show the data sequence relating to the recording operation respectively. The respective time delays due to the processing in the information compression processing circuit 20 and the information extension processing circuit 15 are omitted here for convenience. Further, it is assumed that the respective buffer memories 14 and 21 can store at least five (5) compressed audio blocks.

When the controller 10 receives through the operation section 13 the user's instructions of the simultaneous recording and reproduction of information, i.e., the instruction of reproduction with respect to the first music information and the instruction of recording of the second music information after the first music information, the controller 10 carries out the access operation with respect to the head end of the first music information according to the recording start sector address of "01-minute 00-second 1st-frame" which is recorded in the TOC memory 11. In addition, at this time "01-minute 00-second 1st-frame" is set in the controller 10 as reproduction start address Ap.

Next, as shown in Fig. 12(a), the three (3) head end blocks $PBb_0$ to $PBb_2$ are reproduced and these blocks are written in the buffer memory 14. The compressed audio blocks $PBb_0$ ⋯ ⋯ start to be reproduced (see Fig. 12(b)) from the buffer memory 14 and the extended audio blocks $PBa_0$ ⋯ ⋯ start to be reproduced (see Fig. 12(c)) as soon as the writing operation of the third compressed audio block $PBb_2$ ends at time t1.

Meanwhile, reading operation from the buffer memory 14 is carried out and concurrently the audio blocks $RBa_0$ ⋯ ⋯, which are not compressed, are generated based on the second music information (see Fig. 12(d)) and the compressed audio blocks $RBb_0$ ⋯ ⋯ are written in the buffer memory 21 (see Fig. 12(e)).

Next, the reproduction start address Ap is updated so as to be "01-minute 00-second 46th-frame" which is given by adding $15 \times 3 = 45$ (sectors) to "01-minute 00-second 1st-frame". This is because the compressed audio blocks $PBb_0$ to $PBb_2$ are already reproduced. And, it is judged whether or not the reading of the two (2) blocks $PBb_0$ and $PBb_1$ ends. This judgement is carried out based on the sector address which is recognized by the information extension processing circuit 15.

Thereafter, from time t2 at which the compressed audio block $PBb_1$ is read out of the buffer memory 14, the four (4) compressed audio blocks $PBb_3$ to $PBb_6$ are reproduced, and thereafter are written in the buffer memory 14 (see Fig. 12(a)). And at the same time, reproduction start address Ap is updated so as to be "01-minute 01-second 31st-frame" which is given by adding $15 \times 4 = 60$ (sectors) to "01-minute 00-second 46th-frame".

Next, the access operation is carried out with respect to "04-minute 18-second 16th-frame" which is set as recording start address Ap in the controller 10. It is judged whether or not the four (4) compressed audio blocks $RBb_0$ to $RBb_3$ are written in the buffer memory 21. Thereafter, as soon as the writing operation of the compressed audio block $RBb_3$ ends at time t4, the compressed audio blocks $RBb_0$ to $RBb_3$ are read out of the buffer memory 21, and thereafter are recorded in the corresponding portion on the disk 1. In addition, it is judged based on the sector address, which the controller 10 outputs to the information compression processing circuit 20 for each sector, whether or not the writing operation with respect to the buffer memory 21 ends. And, recording start address Ar is updated so as to be "04-minute 19-second 1st-frame" which is given by adding $15 \times 4 = 60$ (sectors) to "04-minute 18-second 16th-frame".

Next, the access operation is carried out with respect to previously set reproduction start address Ap, i.e, "01-minute 01-second 31st-frame". And at the same time, it is judged whether or not the reading operation of the four (4) compressed audio blocks $PBb_2$ to $PBb_5$ from the buffer memory 14 ends.

The intermittent reproduction and recording operations like above are alternately repeated until the operation section 12 outputs the stop instruction to the controller 10, thereby enabling to simultaneously carry out recording and reproduction of information.

When the controller 10 receives the stop instruction from the operation section 12, the recording start sector address and recording end sector address, which correspond to the recorded second music information, are added to the TOC memory 11. The content which is stored in the TOC memory 11 is recorded as the managing information after the access operation is carried out with respect to the TOC area 1a, thereby ending the specific sequential operations.

The compensation is carried out with respect to the data transmission speeds of the buffer memories 25 and 26, thereby enabling to simultaneously carry out recording and reproduction process at a high speed with respect to arbitrary different portions of the disk 1.

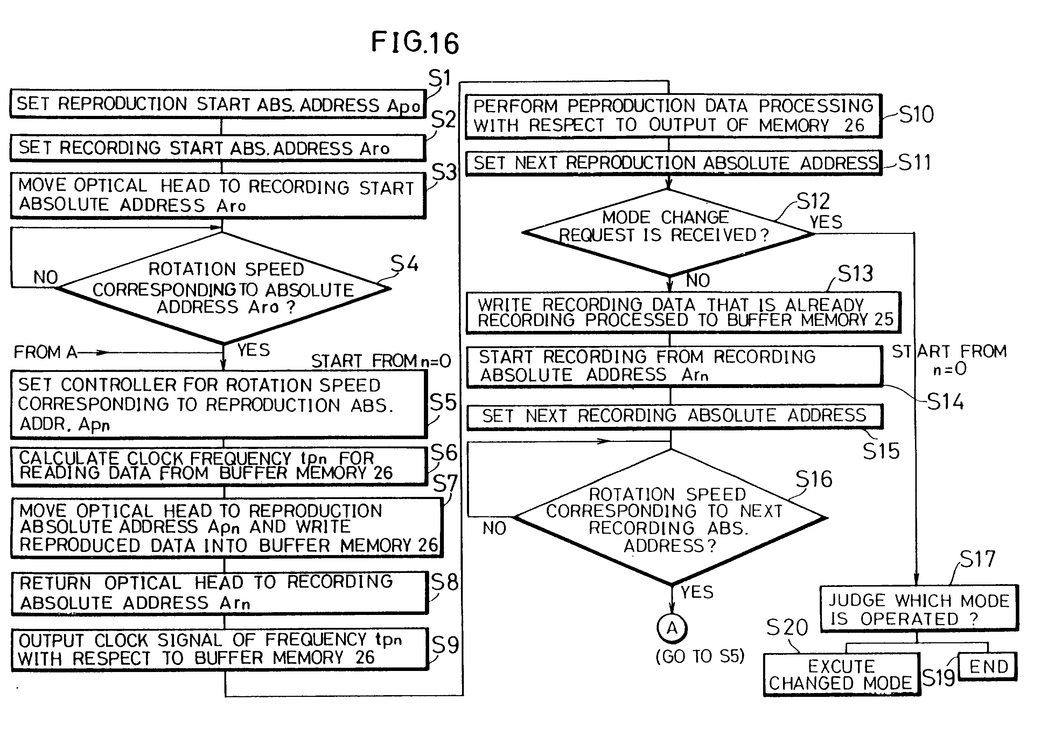

The following deals with the movement of the optical head 3 with reference to Fig. 1 during the simultaneous recording and reproduction process and deals with the control flow of the signal processing with reference to Fig. 16. Here, it is assumed that an absolute address of recording start position denotes $Ar_0$ and an absolute address of reproduction start position denotes $Ap_0$ and is also assumed that the optical head 3 first carries out the access operation with respect to recording start absolute address $Ar_0$.

First, in step (hereinbelow referred to S) 1 and S2, reproduction start absolute address $Ap_0$ and recording start absolute address $Ar_0$ are set with respect to the controller 10. In S3, the optical head 3 moves to recording start absolute address $Ar_0$. The controller 10 outputs the reference frequency, which corresponds to recording start absolute address $Ar_0$, to the CLV control circuit 7. According to the reference frequency, the CLV control circuit 7 controls the spindle motor 4 so as to rotate at the specified rotation speed (S4).

CLV control rotation speed $Rp_0$ corresponding to reproduction start absolute address $Ap_0$ is set in the controller 10, after the rotation speed of the spindle motor 4 reaches CLV control rotation speed $Rr_0$ corresponding to recording start absolute address $Ar_0$ (S5). In order to compensate the reading speed of the reproduced data which is once written in the buffer memory 26, frequency $tp_0$ of the clock signal, which is outputted to the buffer memory 26 from the controller 10, is calculated (S6). Frequency $tp_0$ is calculated by the following equation like previously mentioned when the disk 1 is rotated based on the CLV control: $tp_0 = t_1 \times Rp_0/Rr_0$, where the reading-use clock signal for the buffer memory 26 is equal to constant frequency $t_1$.

Thereafter, the optical head 3 moves to the position of reproduction start absolute address $Ap_0$ and reproducing operation is carried out. The reproduced signal is temporarily stored in the buffer memory 26 (S7). The optical head 3, for the purpose of the simultaneous recording and reproduction process, returns to recording start absolute address $Ar_0$ and becomes in the stand-by condition upon reproduction of data of the predetermined number of blocks (S8). On the other hand, the controller 10 outputs the clock signal having above-mentioned frequency $tp_0$ to the buffer memory 26 (S9), and the data read out of the buffer memory 26 are outputted to the reproduced data processing circuit 9 (S10). And, reproduction start absolute address $Ap_n$, from which the next reproduction is carried out, is set in the controller 10 (S11).

Next, it is judged in S12 whether or not there is the request for changing from the simultaneous recording and reproduction processing mode to other mode such as a single function mode, i.e., an exclusive recording mode, an exclusive reproduction mode, or a stop mode. When no change mode is requested, the recording data are written in the buffer memory 25 through the recording data processing circuit 22 (S13). The recording data are temporarily stored in the buffer memory 21 after completion of the prehandling such as compression of information. Since the disk 1 rotates at CLV control rotation speed $Rr_0$ corresponding to recording start absolute address $Ar_0$, the clock signal having constant frequency $t_1$ is supplied to the buffer memory 25 from the controller 10 so as to read out the data of the buffer memory 25. The data read out of the buffer memory 25 are recorded from recording start absolute address $Ar_0$ (S14).

Recording start absolute address $Ar_n$, from which the next recording operation is carried out, is set in the controller 10 in S15. In S16, the controller 10 outputs to the CLV control circuit 7 a reference frequency corresponding to recording start absolute address $Ar_n$. The CLV control circuit 7 rotates the spindle motor 4 at a specified rotation speed. After the rotation speed of the spindle motor 4 reaches CLV control rotation speed $Rr_n$ corresponding to recording start absolute address $Ar_n$, the process returns to S5. Thereafter, the simultaneous recording and reproduction of information is repeated until the mode change is requested in S12.

When the mode change is requested in S12, it is judged what is the requested mode in S17. Thereafter, either the processing of the requested mode is carried out (S18) or the simultaneous recording and reproduction processing ends (S19).

The above-mentioned embodiment deals with the applications based on the CD format. However, the present invention is not restricted to this embodiment, i.e., there appear to be a variety of modifications with respect to the block configuration and the sector configuration. Moreover, there appear to be a variety of modifications with respect to the pre-format of the absolute address.

The above-mentioned embodiment deals with the audio information. However, the present invention is applicable to the case where the image information, other pictorial or audible continuous information is handled.

Further, the above-mentioned embodiment deals with the audio information which is compressed. However, the present invention is not limited to the compressed audio information. A variety of modifications can be applicable to the present invention provided fundamentally that there is a difference between the transmission speed of the reading operation with respect to a buffer memory and that of the writing operation. For example, in case of the above-mentioned CD format, when the linear velocity is set to be faster than the ordinary velocity, the uncompressed conventional CD (sampling frequency: 44.1 kHz, quantization bit number: 16-bit, channel number: 2), as it is, is applicable to the present invention.

Moreover, the present invention is applicable within the scope thereof to the apparatuses such as an optical disk apparatus, a hard disk apparatus, and a floppy disk apparatus, which are used as a computer-use external memory apparatus.

The information recording and reproduction apparatus of an embodiment of the present invention, as mentioned above, which uses a disk-shaped recording medium wherein position information for recording and reproduction operations is pre-recorded over the whole surface thereof based on the CLV control method, comprises:

a pre-recorded information detection circuit for detecting the position information for recording and reproduction operations one by one;

a spindle motor and a CLV control circuit for rotating the recording medium at a first rotation speed during carrying out recording and reproducing of information with respect to a first radial position on the recording medium, and for rotating the recording medium such that a rotation speed during carrying out recording and reproduction of information with respect to a second radial position on the recording medium coincides with the first rotation speed; and

first and second buffer memories for compensating data transmission speed according to the detected position information for recording and reproduction during carrying out recording and reproducing of information with respect to the second radial position such that the data transmission speed always coincides with that based on the CLV control method.

Therefore, without changing the rotation speed of the recording medium, the information is immediately recorded and reproduced based on the position information, which is pre-recorded according to the CLV control method over the whole surface of the recording medium, with respect to the second radial position. Accordingly, recording and reproduction of information with the movement of a recording/reproducing head can be carried out at a high speed. This is the biggest problem which should be resolved with regard to the information recording and reproduction apparatus employing the CLV control method.

Another embodiment of an information recording and reproduction apparatus of the present invention, as mentioned above, in addition to the above-mentioned structure, further comprises:

a third buffer memory for temporarily storing reproduced data, the third buffer memory being provided in a reproduction system for reproducing continuous information from the recording medium, and being arranged so as to follow the second buffer memory;

a fourth buffer memory for temporarily storing recording data, the fourth buffer memory being provided in a recording system for recording continuous information on the recording medium, and being arranged so as to be in advance of the first buffer memory;

control means for setting a first transmission speed as a data writing speed of the third buffer memory and a second transmission speed, which is slower than the first transmission speed, as a data reading speed of the third buffer memory, and for setting the second transmission speed as a data writing speed of the fourth buffer memory and the first transmission speed as a data reading speed of the fourth buffer memory, and further for writing of data with respect to the third buffer memory and reading data out of the fourth buffer memory alternately,

whereby simultaneous recording and reproduction is carried out with respect to arbitrary different radial positions on the recording medium.

Therefore, the continuous recording and reproducing operations with respect to the different radial positions are carried out simultaneously and at a high speed, while the reproduction operation with respect to the third buffer memory and the recording operation with respect to the fourth buffer memory are alternately carried out.

## Claims

1. Apparatus for recording and reproducing information with respect to a recording disc which is pre-recorded over a recording area thereof with position information for use in CLV control, the apparatus comprising:

   position information detection means (6,8) for detecting said position information so as to determine the current position on the recording disc for a recording or reproducing operation;

   recording-use memory means (25) for temporarily storing information which has been written therein and which is to be recorded on said recording disc;

   reproduction-use memory means (26) for temporarily storing information which has been reproduced from said recording disc and has been written therein;

   rotation speed control means (4,7) for controlling the speed of rotation of said recording disc;

   reading speed control means (10) for controlling the respective bit rates at which information is read from said recording-use and reproduction-use memory means (25,26); characterised by

   operation control means (10) operable in a simultaneous recording and reproducing mode of operation of the apparatus to cause the rotation speed control means (7) to effect rotation of the disc at the same rotational speed when recording or reproducing at a first radial position on the disc and when recording or reproducing at a second radial position on the disc, and to cause the reading speed control means (10) to set the relative reading bit rates of the recording-use and reproduction-use memory means (25,26) employed during the recording or reproducing at the first radial position and during the recording or reproducing at the second radial position in accordance with the detected position information relating to said first and second radial positions so that one or other of said recording-use and reproduction-use memory means has different bit rates for the operations of information writing therein and reading therefrom, the faster of said operations being carried out on information in the form of data bursts, and so as to compensate for the radial separation of said first and second radial positions and thereby maintain the operation as equivalent to CLV operation.

2. Apparatus according to claim 1, wherein said position information detection means (6,8) comprises a pre-recorded information detection circuit means (6) for detecting the pre-recorded position information provided by a groove on said recording medium which is slightly wobbled according to a predetermined frequency signal with respect to a radial direction of the disc, said pre-recorded information detection circuit means (6) including a band-pass filter means and a phase locked loop.

3. Apparatus according to claim 2, wherein said predetermined frequency signal corresponds to biphase-mark modulated data of an absolute address.

4. Apparatus according to any preceding claim, wherein an information recording means is operable to perform magneto-optical recording on the disc based on a magnetic field modulation method and is capable of overwriting.

5. Apparatus according to any preceding claim, wherein said recording-use memory means (25) is a first buffer memory and said reproduction-use memory means (26) is a second buffer memory, said buffer memories being arranged such that information can be written therein and can be read out therefrom.

6. Apparatus according to claim 2, wherein said rotation speed control means includes:

a spindle motor means (4) for rotating said recording disc; and
a constant linear velocity control circuit means (7) for controlling the rotation speed of said spindle motor means in response to said pre-recorded information detection circuit means (6) and said operation control means (10).

7. Apparatus according to claim 1, wherein said operation control means (10) compensates a reading speed $V_R$ such that recording of information with respect to said second radial position is carried out upon completion of reproduction of information from said first radial position by satisfying an equation of $V_R = V_W \times (N_1/N_2)$, where $N_1$ represents an angular rotation speed of said recording disc during reproduction at said first radial position, $N_2$ represents the angular rotation speed for the recording disc associated with recording/reproduction at said second radial position based on the CLV control, $V_W$ represents a writing speed at which information to be recorded at said second radial position is temporarily stored in said recording-use memory means (25), and $V_R$ indicates the reading speed at which the temporarily stored information is read out of said recording-use memory means (25).

8. Apparatus according to claim 1, wherein said operation control means compensates a reading speed $V_2$ such that reproduction of information from said second radial position is carried out upon completion of reproduction of information from said first radial position by satisfying an equation of $V_2 = V_0 \times (N_2/N_1)$, where $N_1$ represents an angular rotation speed of said recording disc during reproduction at said first radial position, $N_2$ represents the angular rotation speed for the recording disc associated with recording/reproduction at said second radial position based on the CLV control, $V_0$ represents a constant speed at which information, which is temporarily stored in the reproduction-use memory means (26), is read out of said reproduction-use memory means (26) when said recording disc rotates based on the CLV control, and $V_2$ represents the reading speed at which information temporarily stored in said reproduction-use memory means (26) is read out of said recording-use memory means (26) during reproduction at said second radial position.

9. Apparatus according to claim 5, further comprising:

third buffer memory means (14) for temporarily storing reproduced data, said third buffer memory means being provided in a reproduction system for reproducing continuous information from said recording disc, and being arranged so as to follow said second buffer memory means (26):
fourth buffer memory means (21) for temporarily storing recording data, said fourth buffer memory means being provided in a recording system for recording continuous information on said recording disc, and being arranged so as to be in advance of said first buffer memory means (25); and
wherein said operation control means (10) is arranged to set a first transmission speed as a writing speed of said third buffer memory means (14) and a second transmission speed, which is slower than the first transmission speed, as a reading speed of said third buffer memory means (14), and for setting the second transmission speed as a writing speed of said fourth buffer memory means (21) and the first transmission speed as a reading speed of said fourth buffer memory means (21), and further for writing of data into said third buffer memory means (14) and reading data out of said fourth buffer memory means alternately,
whereby simultaneous recording and reproduction is carried out with respect to said different radial positions on said recording disc.

10. Apparatus according to any preceding claim, wherein said recording disc is a compact disc.

11. Apparatus according to any preceding claim, wherein said recording disc is a magneto-optical disc.

12. Apparatus according to any preceding claim, in the form of a computer-use external memory apparatus, and selected from the group consisting of an optical disc apparatus, a hard disc apparatus, and a floppy disc apparatus.

13. A method of simultaneously recording and reproducing respective information on a recording disc, the recording disc carrying pre-recorded position information for use in CLV control, the method comprising simultaneously recording and reproducing information at respective different radial positions on the disc while rotating the disc at the same rotational speed, the operation being maintained equivalent to CLV operation by detecting the position information and compensating the relative reading bit rates of recording-use and reproduction-use buffer memories which temporarily store the information which is, respectively, to be recorded on and read from said disc, said compensating being effected in accordance with the detected said position information, so that one or other of said recording-use and reproduction-use memory means has different bit rates for the operations of information writing thereon and reading therefrom, the faster of said operations being carried out on information in the form of data bursts.

14. A method according to claim 13, wherein said compensating step includes the step of:

compensating reading speed $V_R$ such that upon completion of reproduction of information from a first said radial position, recording of information is carried out with respect to a second said radial position by satisfying an equation of $V_R = V_W \times (N_1/N_2)$, where $N_1$ represents a rotation speed of the recording disc during reproduction at the first radial position, $N_2$ represents the rotation speed for the recording disc associated with recording or reproduction at said second radial position, based on the CLV control, $V_W$ represents a writing speed at which information to be recorded at the second radial position is temporarily stored in said recording-use buffer memory, and $V_R$ indicates the reading speed at which the temporarily stored information is read out of said recording use buffer memory.

15. A method according to claim 13, wherein said compensating step includes the step of:

compensating reading speed $V_2$ such that upon completion of reproduction of information from a first radial position, reproduction of information is carried out from a second radial position by satisfying an equation of $V_2 = V_0 \times (N_2/N_1)$, where $N_1$ represents a rotation speed of the recording disc during reproduction at the first radial position, $N_2$ represents a rotation speed for the recording disc associated with recording/ reproduction at said second radial position based on the CLV control, $V_0$ represents a constant speed at which temporarily stored information is read out from the reproduction-use buffer memory when the recording medium rotates based on the CLV control, and $V_2$ represents the reading speed at which temporarily stored information is read out from said reproduction-use buffer memory during reproduction at said second radial position.


**Patentansprüche**

1. Gerät zum Aufzeichnen und Abspielen von Information hinsichtlich einer Aufzeichnungsplatte, auf der in einem Aufzeichnungsbereich Positionsinformation zur Verwendung bei CLV-Regelung vorab aufgezeichnet ist, mit:

- einer Positionsinformations-Erkennungseinrichtung (6, 8) zum Erkennen der Positionsinformation, um die aktuelle Position auf der Aufzeichnungsplatte für einen Aufzeichnungs- oder Abspielvorgang zu erkennen;
- einer Speichereinrichtung (25) für Aufzeichnungszwecke zum Zwischenspeichern von Information, wie sie darin eingeschrieben wurde und auf der Aufzeichnungsplatte aufzuzeichnen ist;
- einer Speichereinrichtung (26) für Abspielzwecke zum Zwischenspeichern von Information, die von der Aufzeichnungsplatte abgespielt wurde und in sie eingeschrieben wurde;
- einer Drehzahl-Regelungseinrichtung (4, 7) zum Regeln der Drehzahl der Aufzeichnungsplatte;
- einer Lesegeschwindigkeit-Steuerungseinrichtung (10) zum Steuern der jeweiligen Bitraten, mit denen Information aus den Speichereinrichtungen zu Aufzeichnungszwecken und Abspielzwecken (25, 26) ausgelesen wird;


**gekennzeichnet durch**

- eine Betriebssteuereinrichtung (10), die in einem Betriebsmodus des Geräts für gleichzeitiges Aufzeichnen und Abspielen betreibbar ist, um dafür zu sorgen, dass die Drehzahl-Regelungseinrichtung (7) eine Drehung der Platte mit derselben Drehzahl beim Aufzeichnen oder Abspielen einer ersten radialen Position auf der Platte sowie beim Aufzeichnen oder Abspielen an einer zweiten radialen Position auf der Platte bewirkt, und sie dafür sorgt, dass die Lesedrehzahl-Steuerungseinrichtung (10) die relativen Lesebitraten der Speichereinrichtungen zu Aufzeichnungszwecken und zu Abspielzwecken (25, 26), wie während des Aufzeichnens oder Abspielens an der ersten radialen Position sowie während des Aufzeichnens oder Abspielens an der zweiten radialen Position verwendet, entsprechend der erfassten Positionsinformation betreffend die erste und zweite radiale Position so einstellt, dass von den Speichereinrichtungen zu Aufzeichnungszwecken und zu Abspielzwecken die eine oder die andere verschiedene Bitraten für die Vorgänge des Einschreibens und des Lesens von Information aufweist, wobei der schnellere dieser Vorgänge an Information in Form von Datenbündeln ausgeführt wird, und um die radiale Trennung der ersten und zweiten radialen Position zu kompensieren, um dadurch den Betrieb als einen solchen aufrechtzuerhalten, der CLV-Betrieb entspricht.

**2.** Gerät nach Anspruch 1, bei dem die Positionsinformations-Erkennungseinrichtung (6, 8) eine Schaltungseinrichtung (6) zum Erkennen vorab aufgezeichneter Information aufweist, um die durch einen Graben auf dem Aufzeichnungsmedium, der entsprechend einem vorbestimmten Frequenzsignal in bezug auf die radiale Richtung der Platte geringfügig gewobbelt ist, gelieferte, vorab aufgezeichnete Positionsinformation zu erkennen, wobei diese Schaltungseinrichtung (6) zum Erkennen vorab aufgezeichneter Information eine Bandpassfilter-Einrichtung und eine PLL-Schaltung enthält.

**3.** Gerät nach Anspruch 2, bei dem das vorbestimmte Frequenzsignal zweiphasig markierungsmodulierten Daten einer Absolutadresse entspricht.

**4.** Gerät nach einem der vorstehenden Ansprüche, bei dem eine Informationsaufzeichnungseinrichtung so betreibbar ist, dass sie magnetooptisches Aufzeichnen auf der Platte auf Grundlage eines Magnetfeld-Modulationsverfahrens ausführt und sie Überschreiben ausführen kann.

**5.** Gerät nach einem der vorstehenden Ansprüche, bei dem die Speichereinrichtung (25) zu Aufzeichnungszwecken ein erster Pufferspeicher ist und die Speichereinrichtung (26) zu Abspielzwecken ein zweiter Pufferspeicher ist, wobei diese Pufferspeicher so ausgebildet sind, dass Information in sie eingeschrieben und aus ihnen ausgelesen werden kann.

**6.** Gerät nach Anspruch 2, **dadurch gekennzeichnet,** dass die Drehzahl-Regelungseinrichtung folgendes aufweist:

- eine Plattenantriebsmotor-Einrichtung (4) zum drehenden Antreiben der Aufzeichnungsplatte; und
- eine Schaltungseinrichtung (7) zur Regelung auf konstante Lineargeschwindigkeit zum Regeln der Drehzahl der Plattenantriebsmotor-Einrichtung auf die Schaltungseinrichtung (6) zum Erkennen vorab aufgezeichneter Information sowie die Betriebssteuereinrichtung (10) hin.

**7.** Gerät nach Anspruch 1, bei dem die Betriebssteuereinrichtung (10) eine Lesegeschwindigkeit $V_R$ so kompensiert, dass das Aufzeichnen von Information hinsichtlich der zweiten radialen Position bei Abschluss des Abspielens von Information von der ersten Position so ausgeführt wird, dass die Gleichung $V_R = V_W \times (N_1/N_2)$ erfüllt ist, wobei $N_1$ die Winkel-Drehgeschwindigkeit der Aufzeichnungsplatte während des Abspielens an der ersten radialen Position repräsentiert, $N_2$ die Winkel-Drehgeschwindigkeit der Aufzeichnungsplatte in Zusammenhang mit dem Aufzeichnen/Abspielen an der zweiten radialen Position auf Grundlage der CLV-Regelung repräsentiert, $V_W$ die Schreibgeschwindigkeit repräsentiert, mit der an der zweiten radialen Position aufzuzeichnende Information in der Speichereinrichtung (25) zu Aufzeichnungszwecken zwischengespeichert wird und $V_R$ die Lesegeschwindigkeit kennzeichnet, mit der die zwischengespeicherte Information aus der Speichereinrichtung (25) zu Aufzeichnungszwecken ausgelesen wird.

**8.** Gerät nach Anspruch 1, bei dem die Betriebssteuereinrichtung eine Lesegeschwindigkeit $V_2$ so kompensiert, dass das Abspielen von Information von der zweiten radialen Position bei Abschluss des Abspielens von Information der ersten radialen Position dadurch ausgeführt wird, dass die Gleichung $V_2 = V_0 \times (N_2/N_1)$ erfüllt ist, wobei $N_1$ die Winkel-Drehgeschwindigkeit der Aufzeichnungsplatte während des Abspielens an der ersten radialen Position repräsentiert, $N_2$ die Winkel-Drehgeschwindigkeit der Aufzeichnungsplatte in Zusammenhang mit dem Aufzeichnen/Abspielen an der zweiten radialen Position auf Grundlage einer CLV-Regelung repräsentiert, $V_0$ eine konstante Geschwindigkeit repräsentiert, mit der Information, die in der Speichereinrichtung (26) zu Abspielzwecken zwischengespeichert ist, aus derselben ausgelesen wird, wenn sich die Aufzeichnungsplatte auf Grundlage der CLV-Regelung dreht, und $V_2$ die Lesegeschwindigkeit repräsentiert, mit der in der Speichereinrichtung (26) für Abspielzwecke zwischengespeicherte Information aus dieser während des Abspielens an der zweiten radialen Position ausgelesen wird.

**9.** Gerät nach Anspruch 5, ferner mit:

- einer dritten Pufferspeichereinrichtung (14) zum Zwischenspeichern abgespielter Daten, wobei diese dritte Pufferspeichereinrichtung in einem Abspielsystem zum Abspielen kontinuierlicher Information von der Aufzeichnungsplatte vorhanden ist und sie so ausgebildet ist, dass sie auf die zweite Pufferspeichereinrichtung (26) folgt;

- einer vierten Pufferspeichereinrichtung (21) zum Zwischenspeichern von Aufzeichnungsdaten, wobei diese vierte Pufferspeichereinrichtung in einem Aufzeichnungssystem zum Aufzeichnen kontinuierlicher Information auf der Aufzeichnungsplatte vorhanden ist und sie so ausgebildet ist, dass sie vor der ersten Pufferspeichereinrichtung (25) liegt; und

- wobei die Betriebssteuereinrichtung (10) so ausgebildet ist, dass sie eine erste Übertragungsgeschwindigkeit als Schreibgeschwindigkeit der dritten Pufferspeichereinrichtung (14) und eine zweite Übertragungsgeschwindigkeit, die geringer als die erste Übertragungsgeschwindigkeit ist, als Lesegeschwindigkeit der dritten Pufferspeichereinrichtung (14) einstellt, und sie die zweite Übertragungsgeschwindigkeit als Schreibgeschwindigkeit der vierten Pufferspeichereinrichtung (21) einstellt und die erste Übertragungsgeschwindigkeit als Lesegeschwindigkeit der vierten Pufferspeichereinrichtung (21) einstellt, und sie ferner Daten in die dritte Pufferspeichereinrichtung (14) einschreibt, abwechselnd mit dem Auslesen von Daten aus der vierten Pufferspeichereinrichtung;

- wodurch gleichzeitige Aufzeichnungs- und Abspielvorgänge hinsichtlich der verschiedenen radialen Positionen der Aufzeichnungsplatte ausgeführt werden.

10. Gerät nach einem der vorstehenden Ansprüche, bei dem die Aufzeichnungsplatte eine Kompaktplatte ist.

11. Gerät nach einem der vorstehenden Ansprüche, bei dem die Aufzeichnungsplatte eine magnetooptische Platte ist.

12. Gerät nach einem der vorstehenden Ansprüche, in Form eines externen Speichergeräts für Computerzwecke, wie aus der aus optischen Plattengeräten, Festplattengeräten und Diskettengeräten bestehenden Gruppe ausgewählt.

13. Verfahren zum gleichzeitigen Aufzeichnen und Abspielen jeweiliger Information auf bzw. von einer Aufzeichnungsplatte, die vorab aufgezeichnete Positionsinformation zur Verwendung bei CLV-Regelung trägt, wobei das Verfahren folgendes umfasst: gleichzeitiges Aufzeichnen und Abspielen von Information an jeweils verschiedenen radialen Positionen der Platte, während die Platte mit derselben Drehzahl gedreht wird, wobei der Betrieb dadurch entsprechend einem CLV-Betrieb aufrechterhalten wird, dass die Positionsinformation erfasst wird und die relativen Lesebitraten von Pufferspeichern zu Aufzeichnungszwecken und Abspielzwecken, die Information zwischenspeichern, die auf der Platte aufzuzeichnen bzw. von dieser zu lesen ist, wobei die Kompensation entsprechend der erfassten Positionsinformation so ausgeführt wird, dass von den Speichereinrichtungen zu Aufzeichnungszwecken und Abspielzwecken die eine oder andere verschiedene Bitraten für die Vorgänge des Einschreibens und des Auslesens von Information aufweist, wobei der schnellere der Vorgänge an Information in Form von Datenbündeln ausgeführt wird.

14. Verfahren nach Anspruch 13, bei dem der Kompensationsschritt den folgenden Schritt aufweist:

- Kompensieren der Lesegeschwindigkeit $V_R$ in solcher Weise, dass bei Abschluss des Abspielens von Information von einer ersten radialen Position das Aufzeichnen von Information hinsichtlich einer zweiten radialen Position dadurch ausgeführt wird, dass die Gleichung $V_R = V_W \times (N_1/N_2)$ erfüllt wird, wobei $N_1$ die Drehzahl der Aufzeichnungsplatte während des Abspielens an der ersten radialen Position repräsentiert, $N_2$ die Drehzahl der Aufzeichnungsplatte in Zusammenhang mit dem Aufzeichnen oder Abspielen an der zweiten radialen Position, auf Grundlage der CLV-Regelung, repräsentiert, $V_W$ die Schreibgeschwindigkeit repräsentiert, mit der an der zweiten radialen Position aufzuzeichnende Information im Pufferspeicher zu Aufzeichnungszwecken zwischengespeichert wird und $V_R$ die Lesegeschwindigkeit kennzeichnet, mit der zwischengespeicherte Information aus dem Pufferspeicher zu Aufzeichnungszwecken ausgelesen wird.

15. Verfahren nach Anspruch 13, bei dem der Kompensationsschritt den folgenden Schritt aufweist:

- Kompensieren der Lesegeschwindigkeit $V_2$ in solcher Weise, dass bei Abschluss des Abspielens von Information von einer ersten radialen Position das Abspielen von Information von einer zweiten radialen Information dadurch ausgeführt wird, dass die Gleichung $V_2 = V_0 \times (N_2/N_1)$ erfüllt wird, wobei $N_1$ die Drehzahl der Aufzeichnungsplatte während des Abspielens an der ersten radialen Position repräsentiert, $N_2$ die Drehzahl der Aufzeichnungsplatte in Zusammenhang mit dem Aufzeichnen/Abspielen an der zweiten radialen Position auf Grundlage der CLV-Regelung repräsentiert, $V_0$ eine konstante Geschwindigkeit repräsentiert, mit der zwischengespeicherte Information aus dem Pufferspeicher zu Abspielzwecken ausgelesen wird, wenn sich der Aufzeichnungsträger auf Grundlage der CLV-Regelung dreht, und $V_2$ die Lesegeschwindigkeit repräsentiert, mit der zwischengespeicherte Information während des Abspielens an der zweiten radialen Position aus dem Pufferspeicher zu Abspielzwecken ausgelesen wird.

## Revendications

1. Appareil pour enregistrer et reproduire des informations relativement à un disque d'enregistrement qui est préenregistré sur une zone d'enregistrement de celui-ci avec des informations de position destinées à être utilisées dans une commande à vitesse linéaire constante (CLV), l'appareil comprenant:

   des moyens de détection d'informations de position (6, 8) pour détecter lesdites informations de position afin de déterminer la position courante sur le disque d'enregistrement pour une opération d'enregistrement ou de reproduction;

   des moyens de mémoire utilisés en enregistrement (25) pour stocker temporairement des informations qui y ont été écrites et qui doivent être enregistrées sur ledit disque d'enregistrement;

   des moyens de mémoire utilisés en reproduction (26) pour stocker temporairement des informations qui ont été reproduites à partir dudit disque d'enregistrement et ont été écrites dans ceux-ci;

   des moyens de commande de vitesse de rotation (4, 7) pour commander la vitesse de rotation dudit disque d'enregistrement;

   des moyens de commande de vitesse de lecture (10) pour commander les débits binaires respectifs avec lesquels des informations sont lues dans lesdits moyens de mémoire utilisés en enregistrement et utilisés en reproduction (25, 26); caractérisé par

   des moyens de commande d'opération (10) pouvant être actionnés dans un mode d'opération simultanée d'enregistrement et de reproduction de l'appareil pour amener les moyens de commande de vitesse de rotation (7) à produire une rotation du disque à la même vitesse de rotation pendant un enregistrement ou une reproduction à une première position radiale sur le disque et pendant un enregistrement ou une reproduction à une seconde position radiale sur le disque, et pour amener les moyens de commande de vitesse de lecture (10) à établir des débits binaires de lecture relatifs des moyens de mémoire utilisés en enregistrement et utilisés en reproduction (25, 26), employés pendant l'enregistrement ou la reproduction à la première position radiale et pendant l'enregistrement ou la reproduction à la seconde position radiale, en fonction des informations de position détectées relatives auxdites première et seconde positions radiales, de façon que l'un ou l'autre desdits moyens de mémoire utilisés en enregistrement et utilisés en reproduction possède des débits binaires différents pour les opérations d'écriture et de lecture d'informations dans ceux-ci, la plus rapide desdites opérations étant effectuée sur des informations ayant la forme de salves de données, et de façon à compenser la séparation radiale desdites première et seconde positions radiales et de maintenir ainsi l'opération comme équivalente à une opération à vitesse linéaire constante (CLV).

2. Appareil selon la revendication 1, dans lequel lesdits moyens de détection d'informations de position (6, 8) comprennent des moyens à circuit de détection d'informations préenregistrées (6) pour détecter les informations de position préenregistrées fournies par une rainure sur ledit support d'enregistrement qui est légèrement modulée en oscillation en fonction d'un signal de fréquence prédéterminé par rapport à une direction radiale du disque, lesdits moyens à circuit de détection d'informations préenregistrées (6) incluant des moyens à filtre passe-bande et une boucle à verrouillage de phase.

3. Appareil selon la revendication 2, dans lequel ledit signal de fréquence prédéterminé correspond à des données modulées par marques à deux états de phase d'une adresse absolue.

4. Appareil selon l'une quelconque des revendications précédentes, dans lequel des moyens d'enregistrement d'informations peuvent être actionnés de manière à effectuer un enregistrement magnéto-optique sur le disque selon le principe d'un procédé de modulation de champ magnétique, et sont capables d'effectuer une réécriture.

5. Appareil selon l'une quelconque des revendications précédentes, dans lequel lesdits moyens de mémoire utilisés en enregistrement (25) sont constitués par une première mémoire-tampon et lesdits moyens de mémoire utilisés en reproduction (26) sont constitués par une seconde mémoire-tampon, lesdites mémoires-tampons étant prévues de telle manière que des informations peuvent y être écrites et lues.

6. Appareil selon la revendication 2, dans lequel lesdits moyens de commande de vitesse de rotation incluent:

des moyens à moteur d'axe de rotation (4) pour entraîner en rotation ledit disque d'enregistrement; et

des moyens à circuit de commande à vitesse linéaire constante (7) pour commander la vitesse de rotation desdits moyens à moteur d'axe de rotation en réponse auxdits moyens à circuit de détection d'informations préenregistrées (6) et auxdits moyens de commande d'opération (10).

**7.** Appareil selon la revendication 1, dans lequel lesdits moyens de commande d'opération (10) compensent une vitesse de lecture $V_R$ de telle manière qu'un enregistrement d'informations relativement à ladite seconde position radiale est effectué à la fin d'une reproduction d'informations à partir de ladite première position radiale en satisfaisant une équation $V_R = V_W \times (N_1/N_2)$, où $N_1$ représente une vitesse de rotation angulaire dudit disque d'enregistrement pendant une reproduction à ladite première position radiale, $N_2$ représente la vitesse de rotation angulaire pour le disque d'enregistrement associée à un enregistrement ou une reproduction à ladite seconde position radiale sur le principe de la commande à vitesse linéaire constante (CLV), $V_W$ représente une vitesse d'écriture à laquelle des informations à enregistrer à ladite seconde position radiale sont temporairement stockées dans lesdits moyens de mémoire utilisés en enregistrement (25), et $V_R$ indique la vitesse de lecture à laquelle les informations stockées temporairement sont lues dans lesdits moyens de mémoire utilisés en enregistrement (25).

**8.** Appareil selon la revendication 1, dans lequel lesdits moyens de commande d'opération compensent une vitesse de lecture $V_2$ de telle manière qu'une reproduction d'informations à partir de ladite seconde position radiale est effectuée à la fin d'une reproduction d'informations à partir de ladite première position radiale en satisfaisant une équation $V_2 = V_0 \times (N_2/N_1)$, où $N_1$ représente une vitesse de rotation angulaire dudit disque d'enregistrement pendant une reproduction à ladite première position radiale, $N_2$ représente la vitesse de rotation angulaire pour le disque d'enregistrement associée à un enregistrement ou une reproduction à ladite seconde position radiale sur le principe de la commande à vitesse linéaire constante (CLV), $V_0$ représente une vitesse constante à laquelle des informations, qui sont temporairement stockées dans les moyens de mémoire utilisés en reproduction (26) sont lues dans lesdits moyens de mémoire utilisés en reproduction (26) lorsque ledit disque d'enregistrement tourne sur le principe de la commande à vitesse linéaire constante (CLV), et $V_2$ représente la vitesse de lecture à laquelle des informations stockées temporairement dans lesdits moyens de mémoire utilisés en reproduction (26) sont lues dans lesdits moyens de mémoire utilisés en enregistrement (26) pendant une reproduction à ladite seconde position radiale.

**9.** Appareil selon la revendication 5, comprenant également:

des troisièmes moyens de mémoire-tampon (14) pour stocker temporairement des données reproduites, lesdits troisièmes moyens de mémoire-tampon étant prévus dans un système de reproduction pour reproduire des informations continues à partir dudit disque d'enregistrement, et étant disposés de manière à faire suite auxdits seconds moyens de mémoire-tampon (26);

des quatrièmes moyens de mémoire-tampon (21) pour stocker temporairement des données d'enregistrement, lesdits quatrièmes moyens de mémoire-tampon étant prévus dans un système d'enregistrement pour enregistrer des informations continues sur ledit disque d'enregistrement, et étant disposés de manière à précéder lesdits premiers moyens de mémoire-tampon (25); et

dans lequel lesdits moyens de commande d'opération (10) sont prévus pour établir une première vitesse de transmission en tant que vitesse d'écriture desdits troisièmes moyens de mémoire-tampon (14) et une seconde vitesse de transmission, qui est inférieure à la première vitesse de transmission, en tant que vitesse de lecture desdits troisièmes moyens de mémoire-tampon (14), et pour établir la seconde vitesse de transmission en tant que vitesse d'écriture desdits quatrièmes moyens de mémoire-tampon (21) et la première vitesse de transmission en tant que vitesse de lecture desdits quatrièmes moyens de mémoire-tampon (21), et également pour écrire des données dans lesdits troisièmes moyens de mémoire-tampon (14) et lire des données dans lesdits quatrièmes moyens de mémoire-tampon de manière alternée,

de façon qu'un enregistrement et une reproduction simultanés sont effectués relativement auxdites différentes positions radiales sur ledit disque d'enregistrement.

**10.** Appareil selon l'une quelconque des revendications précédentes, dans lequel ledit disque d'enregistrement est un disque compact.

**11.** Appareil selon l'une quelconque des revendications précédentes, dans lequel ledit disque d'enregistrement est un disque magnéto-optique.

**12.** Appareil selon l'une quelconque des revendications précédentes, ayant la forme d'un dispositif de mémoire externe utilisé par un ordinateur, et choisi dans le groupe constitué d'un dispositif de disque optique, d'un dispositif de disque dur, et d'un dispositif de disquette.

13. Procédé pour enregistrer et reproduire simultanément des informations respectives sur un disque d'enregistrement, le disque d'enregistrement portant des informations de position préenregistrées destinées à être utilisées dans une commande à vitesse linéaire constante (CLV), le procédé comprenant un enregistrement et une reproduction simultanés d'informations à des positions radiales différentes respectives sur le disque alors que le disque est entraîné en rotation à la même vitesse de rotation, l'opération étant maintenue équivalente à une opération à vitesse linéaire constante (CLV) en détectant les informations de position et en compensant les débits binaires de lecture relatifs des mémoires-tampons utilisées en enregistrement et utilisées en reproduction qui stockent temporairement les informations qui doivent respectivement être enregistrées et lues dans ledit disque, ladite compensation étant effectuée en fonction desdites informations de position détectées, de façon que l'un ou l'autre desdits moyens de mémoire utilisés en enregistrement et utilisés en reproduction possède des débits binaires différents pour les opérations d'écriture et de lecture d'informations dans ceux-ci, la plus rapide de ces opérations étant effectuée sur des informations ayant la forme de salves de données.

14. Procédé selon la revendication 13, dans lequel ladite étape de compensation inclut l'étape consistant à:
    compenser une vitesse de lecture $V_R$ de telle manière qu'à la fin d'une reproduction d'informations à partir d'une première dite position radiale, un enregistrement d'informations est effectué relativement à une seconde dite position radiale en satisfaisant une équation $V_R = V_W \times (N_1/N_2)$, où $N_1$ représente une vitesse de rotation du disque d'enregistrement pendant une reproduction à la première position radiale, $N_2$ représente la vitesse de rotation pour le disque d'enregistrement associée à un enregistrement ou une reproduction à ladite seconde position radiale, sur le principe de la commande à vitesse linéaire constante (CLV), $V_W$ représente une vitesse d'écriture à laquelle des informations à enregistrer à la seconde position radiale sont temporairement stockées dans lesdits moyens de mémoire utilisés en enregistrement, et $V_R$ indique la vitesse de lecture à laquelle les informations stockées temporairement sont lues dans lesdits moyens de mémoire utilisés en enregistrement.

15. Procédé selon la revendication 13, dans lequel ladite étape de compensation inclut l'étape consistant à:
    compenser une vitesse de lecture $V_2$ de telle manière qu'à la fin d'une reproduction d'informations à partir d'une première position radiale, une reproduction d'informations est effectuée à partir d'une seconde position radiale en satisfaisant une équation $V_2 = V_0 \times (N_2/N_1)$, où $N_1$ représente une vitesse de rotation du disque d'enregistrement pendant une reproduction à la première position radiale, $N_2$ représente une vitesse de rotation pour le disque d'enregistrement associée à un enregistrement ou une reproduction à ladite seconde position radiale sur le principe de la commande à vitesse linéaire constante (CLV), $V_0$ représente une vitesse constante à laquelle des informations stockées temporairement sont lues dans la mémoire-tampon utilisée en reproduction lorsque le support d'enregistrement tourne sur le principe de la commande à vitesse linéaire constante (CLV), et $V_2$ représente la vitesse de lecture à laquelle des informations stockées temporairement sont lues dans ladite mémoire-tampon utilisée en reproduction pendant une reproduction à ladite seconde position radiale.

FIG.1

FI G. 2

FIG. 3

# FIG.4

MAIN DATA FIELD 103a

USER DATA

103b \103c 103d

SECTOR
SYNCHRONIZATION
SIGNAL

SECTOR
ADDRESS

# FIG.5

| SECTOR104a0 |
| SECTOR104a1 |
| SECTOR104a2 |
| SECTOR104a3 |
| |
| SECTOR104a11 |
| SECTOR104a12 |
| SECTOR104a13 |
| SECTOR104a14 |

BLOCK
104a

DATA
BLOCK

105

FIG.6(a)

| Ba$_0$ | Ba$_1$ | Ba$_2$ |

FIG.6(b)

| | Bb$_0$ | Bb$_1$ | Bb$_2$ |

FIG.6(c)

| | Bb$_0$ | | Bb$_1$ | |

tw0
tw1
tw2 tw3
tw4 tw5

FIG.7(a)

| Bb$_0$ | Bb$_1$ | Bb$_2$ | Bb$_3$ | | Bb$_4$ | | Bb$_5$ | |

FIG.7(b)

| | Bb$_0$ | Bb$_1$ | Bb$_2$ |

FIG.7(c)

| | Ba$_0$ | Ba$_1$ | Ba$_2$ |

tr0    tr2        tr4  tr6        tr7  tr9
   tr1          tr3    tr5          tr8

# FIG. 8

# FIG.9(a)

# FIG.9(b)

## FIG.10

$$t_x \rightarrow \boxed{\begin{array}{c} \text{BUFFER} \\ \text{MEMORY} \quad 26 \end{array}}$$

$$f_m = \frac{1}{2} \times f_R$$

FIG.11(a)

$$f_n = f_R$$

FIG.11(b)

# FIG.12

PBb1    PBb4   PBb5        PBb8   PBb9

PBb0   PBb2    PBb3     PBb6        PBb7      PBb10

(a) WRITING TO BUFEER MEMORY 14

(b) READING FROM BUFFER MEMORY 14  |  PBb0 | PBb1 | PBb2 | PBb3 | PBb4 | PBb5 | PBb6 | PBb7 | PBb8 | PBb9

(c) AUDIO OUTPUT  |  PBa0 | PBa1 | PBa2 | PBa3 | PBa4 | PBa5 | PBa6 | PBa7 | PBa8 | PBa9

(d) AUDIO INPUT  |  RBa0 | RBa1 | RBa2 | RBa3 | RBa4 | RBa5 | RBa6 | RBa7 | RBa8 | RBa9

(e) WRITING TO BUFFER MEMORY 21  |  RBb0 | RBb1 | RBb2 | RBb3 | RBb4 | RBb5 | RBb6 | RBb7 | RBb8 | RBb9

RBb1   RBb2        RBb5   RBb6

RBb0    RBb3     RBb4      RBb7

(f) READING FROM BUFFER MEMORY 21

t0   t1     t2   t3    t4    t5    t6   t7    t8    t9

28

# FIG.13

100a

100b

100c

# FIG.14

FRAME 101a

| | | 24-BYTE MAIN DATA AND 8-BYTE PARITY |

101b

101c

101d

FRAME
SYNCHRONIZATION
SIGNAL

SUB-CODE

FIG.15

# FIG.16

SET REPRODUCTION START ABS. ADDRESS Apo ⌐S1

SET RECORDING START ABS. ADDRESS Aro ⌐S2

MOVE OPTICAL HEAD TO RECORDING START ABSOLUTE ADDRESS Aro ⌐S3

ROTATION SPEED CORRESPONDING TO ABSOLUTE ADDRESS Aro ? ⌐S4

NO

FROM A⟶ YES START FROM n=0

SET CONTROLLER FOR ROTATION SPEED CORRESPONDING TO REPRODUCTION ABS. ADDR. Apn ⌐S5

CALCULATE CLOCK FREQUENCY tpn FOR READING DATA FROM BUFFER MEMORY 26 ⌐S6

MOVE OPTICAL HEAD TO REPRODUCTION ABSOLUTE ADDRESS Apn AND WRITE REPRODUCED DATA INTO BUFFER MEMORY 26 ⌐S7

RETURN OPTICAL HEAD TO RECORDING ABSOLUTE ADDRESS Arn ⌐S8

OUTPUT CLOCK SIGNAL OF FREQUENCY tpn WITH RESPECT TO BUFFER MEMORY 26 ⌐S9

PERFORM PEPRODUCTION DATA PROCESSING WITH RESPECT TO OUTPUT OF MEMORY 26 ⌐S10

SET NEXT REPRODUCTION ABSOLUTE ADDRESS ⌐S11

MODE CHANGE REQUEST IS RECEIVED ? ⌐S12 YES

NO ⌐S13

WRITE RECORDING DATA THAT IS ALREADY RECORDING PROCESSED TO BUFFER MEMORY 25

START RECORDING FROM RECORDING ABSOLUTE ADDRESS Arn ⌐S14

START FROM n=0

SET NEXT RECORDING ABSOLUTE ADDRESS ⌐S15

ROTATION SPEED CORRESPONDING TO NEXT RECORDING ABS. ADDRESS ? ⌐S16

NO

YES

(A) (GO TO S5)

JUDGE WHICH MODE IS OPERATED ? ⌐S17

S20

EXCUTE CHANGED MODE ⌐S19

END

EP 0 546 818 B1

31